# EUROPEAN PATENT APPLICATION

(11) **EP 4 697 802 A1**
(43) Date of publication of application: **18.02.2026**
(21) Application number: 24802815.1
(22) Date of filing: 28.04.2024
(51) Int. Cl.: H04W 36/00, H04W 8/02, H04W 8/14

(54) **COMMUNICATION METHOD, DEVICE, SYSTEM, CHIP, MEDIUM, AND PROGRAM PRODUCT**

(30) Priority: 08.05.2023 CN 202310511467
(71) Applicant: Huawei Technologies Co., Ltd., Shenzhen, Guangdong 518129 (CN)
(72) Inventor: ZHANG, Zhiqin, Shenzhen, Guangdong 518129 (CN); FENG, Zhao, Shenzhen, Guangdong 518129 (CN); ZHU, Haoren, Shenzhen, Guangdong 518129 (CN); WANG, Yuan, Shenzhen, Guangdong 518129 (CN)
(74) Representative: Körber, Martin Hans
(86) International application number: PCT/CN2024/090372
(87) International publication number: WO 2024/230530

(57) **Abstract**

Embodiments of this disclosure relate to a communication method, a device, a system, a chip, a medium, and a program product. A communication method includes: A first network device in a visited network of a terminal device sends a first message to a second network device in a home network of the terminal device based on a request received from the terminal device for establishment of a session; the first network device receives a second message from the second network device, where the second message includes an accept message for establishment of the session and indication information, the accept message for establishment of the session indicates that the request for establishment of the session is accepted by a third network device in the home network, and the indication information indicates the first network device to assist in establishing a first tunnel between a radio access network device and a user plane function in the visited network for the session. In this manner, an access network sharing-based terminal device session establishment solution is provided, so that interoperability of the terminal device between a shared access network and a home core network and session continuity when the terminal device moves between visited networks can be implemented.

## Description

### CROSS-REFERENCE TO RELATED APPLICATIONS

This application claims priority to Chinese Patent Application No. 202310511467.1, filed on May 8, 2023 and entitled "COMMUNICATION METHOD, DEVICE, SYSTEM, CHIP, MEDIUM, AND PROGRAM PRODUCT", which is incorporated herein by reference in its entirety.

### TECHNICAL FIELD

This disclosure relates to the communication field, and more specifically, to a communication method, a device, a chip, a computer-readable storage medium, and a computer program product.

### BACKGROUND

Network sharing is a way for operators to share mobile network resources. It enables operators to improve network deployment maximally and improve the overall network quality. There are different types of network sharing. For example, different core network operators may be allowed to connect to a shared radio access network (Radio Access Network, RAN), and the operators not only share radio network elements, but also may share radio resources. With expansion of deployment of the fifth generation (Fifth Generation, 5G), more network sharing scenarios may emerge. One of challenges that the network sharing faces is to maintain interconnection between the shared radio access network (for example, a next generation radio access network (Next Generation Ratio Access Network, NG-RAN)) and participating core networks. This may involve numerous network interfaces, especially in a case of a large quantity of shared base stations.

There is a need to study other network sharing scenarios, for example, a scenario in which a radio access network is shared among a plurality of operators, but there may be no direct connection between the shared radio access network and participating core networks, along with a user equipment (User Equipment, UE) session establishment process in such a network sharing scenario.

### SUMMARY

Example embodiments of this disclosure provide an access network sharing-based UE session establishment solution, relating to a communication method, a device, a system, a chip, a computer-readable storage medium, and a computer program product.

According to a first aspect, an embodiment of this disclosure provides a communication method. The method includes: A first network device in a visited network of a terminal device sends a first message to a second network device in a home network of the terminal device based on a request received from the terminal device for establishment of a session, where the first message includes the request for establishment of the session; the first network device receives a second message from the second network device, where the second message includes an accept message for establishment of the session and indication information, the accept message for establishment of the session indicates that the request for establishment of the session is accepted by a third network device in the home network, and the indication information indicates the first network device to assist in establishing a first tunnel between a radio access network device and a user plane function in the visited network for the session.

In this manner, an access network sharing-based UE session establishment solution is provided. In this solution, a network device in the home network of the UE establishes and maintains a UE session, so that interoperability of the UE between different radio access technologies (Radio Access Technology, RAT) between a shared access network and a home core network and session continuity when the UE moves between visited networks can be implemented.

In some embodiments, the accept message for establishment of the session includes first tunnel information that is for establishing the first tunnel and that is at the user plane function in the visited network. In this manner, the first network device may obtain the first tunnel information at the user plane function in the visited network from the second network device in the home network, and send the first tunnel information to a radio access network side. The radio access network device binds the first tunnel information to second tunnel information that is at the radio access network device and that is for identifying the first tunnel, to establish the first tunnel between the radio access network device and the user plane function in the visited network for the session.

In some embodiments, the first network device further sends the first tunnel information to the radio access network device, and the first network device receives, from the radio access network device, the second tunnel information that is for establishing the first tunnel and that is at the radio access network device. In this manner, the first network device may obtain the second tunnel information at the radio access network device, to establish, at the user plane function in the visited network, the first tunnel between the radio access network device and the user plane function in the visited network for the session.

In some embodiments, the first network device sends the second tunnel information to the user plane function in the visited network based on the indication information via a fourth network device in the visited network, where the first tunnel information and the second tunnel information are for identifying the first tunnel. In this manner, the first network device sends the second tunnel information to the user plane function in the visited network based on the indication information, to assist in establishing the first tunnel.

In some embodiments, the first network device determines an identifier of the fourth network device before sending the first message, where the first message includes the identifier of the fourth network device. The identifier of the fourth network device may include an address, an identity (Identity, ID), a uniform resource identifier (Uniform Resource Identifier, URI), or the like of the fourth network device. For example, the first network device may parse the request of the terminal device for establishment of the session, determine the identifier of the fourth network device, encapsulate the identifier of the fourth network device into the first message, and send the identifier of the fourth network device to the second network device, so that the network device in the home network of the UE establishes the UE session via the fourth network device.

In some embodiments, determining the identifier of the fourth network device includes: The first network device obtains the identifier of the fourth network device from a storage function device in the visited network based on network slice information in the request for establishment of the session. In this manner, the first network device may obtain the identifier of the fourth network device based on the network slice information obtained by parsing the request for establishment of the session.

In some embodiments, determining the identifier of the fourth network device includes: The first network device selects, based on a locally configured selection policy, the fourth network device used for the request for establishment of the session; and the first network device determines the identifier of the selected fourth network device. In this manner, the first network device may select the fourth network device based on the locally configured selection policy. For example, the selected fourth network device may be a dedicated fourth network device set by the first network device for a terminal device that does not belong to a local network.

In some embodiments, the first network device determines an identifier of the fourth network device from the second message, where the identifier of the fourth network device is obtained by the second network device from a storage function device in the visited network. In this manner, the first network device may send the request for establishment of the session to the second network device without parsing the request of the terminal device for establishment of the session, and the second network device obtains the identifier of the fourth network device, and sends the identifier of the fourth network device to the first network device in the second message.

According to a second aspect, an embodiment of this disclosure provides a communication method. The method includes: A second network device in a home network of a terminal device receives a first message from a first network device in a visited network of the terminal device, where the first message includes a request of the terminal device for establishment of a session; the second network device sends a second message to the first network device, where the second message includes an accept message for establishment of the session and indication information, the accept message for establishment of the session indicates that the request for establishment of the session is accepted by a third network device in the home network, and the indication information indicates the first network device to assist in establishing a first tunnel between a radio access network device and a user plane function in the visited network for the session.

In this manner, an access network sharing-based UE session establishment solution is provided. In this solution, a network device in the home network of the UE establishes and maintains a UE session, so that interoperability of the UE between different RATs between a shared access network and a home core network and session continuity when the UE moves between visited networks can be implemented.

In some embodiments, the first message includes an identifier of a fourth network device in the visited network. In this manner, the second network device may obtain, from the first message, the identifier of the fourth network device provided by the first network device.

In some embodiments, the second network device obtains the identifier of the fourth network device in the visited network from a network repository function in the home network based on network slice information requested by the terminal device in the first message. In this manner, the first network device may neither parse the request of the terminal device for establishment of the session nor encapsulate the identifier of the fourth network device into the first message, and the second network device parses the request of the terminal device for establishment of the session and obtains the identifier of the fourth network device.

In some embodiments, the second network device sends the identifier of the fourth network device and the request for establishment of the session to the third network device in the home network. In this manner, the second network device sends the identifier of the fourth network device to the third network device in the home network, the third network device performs necessary signaling exchange for session establishment with the fourth network device, and the third network device determines that the request for establishment of the session is accepted by a core network.

In some embodiments, the second network device receives the accept message for establishment of the session from the third network device, where the accept message for establishment of the session is generated by the third network device based on a response message received from the fourth network device for establishment of the session. In this manner, the second network device receives the accept message for establishment of the session, and may send the accept message for establishment of the session to the first network device.

In some embodiments, the accept message for establishment of the session includes first tunnel information at the user plane function in the visited network, and the first tunnel information is for identifying the first tunnel. In this manner, the second network device may obtain the first tunnel information at the user plane function in the visited network, and send the first tunnel information to the radio access network device, to identify (for example, establish) the first tunnel by using the first tunnel information and second tunnel information that is at the radio access network device.

According to a third aspect, an embodiment of this disclosure provides a communication method. The method includes: A third network device in a home network of a terminal device receives a request of the terminal device for establishment of a session and an identifier of a fourth network device in a visited network from a second network device in the home network of the terminal device; the third network device generates an accept message for establishment of the session based on a response message received from the fourth network device for establishment of the session, where the accept message for establishment of the session indicates that the request for establishment of the session is accepted by the third network device; and the third network device sends the accept message for establishment of the session to the second network device.

In this manner, an access network sharing-based UE session establishment solution is provided. In this solution, a network device in the home network of the UE establishes and maintains a UE session, so that interoperability of the UE between different RATs between a shared access network and a home core network and session continuity when the UE moves between visited networks can be implemented.

In some embodiments, the third network device sends third tunnel information at a user plane function in the home network to the fourth network device, where the third tunnel information is for identifying a second tunnel between a user plane function in the visited network and the user plane function in the home network. In this manner, the third tunnel information at the user plane function in the home network and fourth tunnel information at the user plane function in the visited network may be used at the fourth network device to identify (for example, establish) the second tunnel.

In some embodiments, the third network device receives the response message for establishment of the session from the fourth network device, where the response message for establishment of the session includes first tunnel information and the fourth tunnel information that are at the user plane function in the visited network, the first tunnel information is for identifying a first tunnel between a radio access network device and the user plane function in the visited network, the fourth tunnel information is for identifying the second tunnel, and the accept message for establishment of the session includes the first tunnel information. In this manner, the third network device may receive the first tunnel information and the fourth tunnel information that are respectively for identifying the first tunnel and the second tunnel, to establish a user plane transmission link used for the session of the terminal device.

According to a fourth aspect, an embodiment of this disclosure provides a communication method. The method includes: A first network device in a visited network of a terminal device sends a first message to a second network device in a home network of the terminal device based on a request received from the terminal device for establishment of a session, where the first message includes a request for establishment of a session; the second network device sends a request for establishment of a session and an identifier of a fourth network device in the visited network to a third network device in the home network; the third network device generates an accept message for establishment of the session based on a response message received from the fourth network device for establishment of the session, where the accept message for establishment of the session indicates that the request for establishment of the session is accepted by the third network device; the third network device sends the accept message for establishment of the session to the second network device; and the second network device sends a second message to the first network device, where the second message includes the accept message for establishment of the session and indication information, and the indication information indicates the first network device to assist in establishing a first tunnel between a radio access network device and a user plane function in the visited network for the session.

In this manner, an access network sharing-based UE session establishment solution is provided. In this solution, a network device in the home network of the UE establishes and maintains a UE session, so that interoperability of the UE between different RATs between a shared access network and a home core network and session continuity when the UE moves between visited networks can be implemented.

In some embodiments, the first network device determines the identifier of the fourth network device before sending the first message, where the first message includes the identifier of the fourth network device. For example, the first network device may parse the request of the terminal device for establishment of the session, determine the identifier of the fourth network device, encapsulate the identifier of the fourth network device into the first message, and send the identifier of the fourth network device to the second network device, so that the network device in the home network of the UE establishes the UE session via the fourth network device.

In some embodiments, determining the identifier of the fourth network device includes: The first network device obtains the identifier of the fourth network device from a storage function device in the visited network based on network slice information in the request for establishment of the session. In this manner, the first network device may obtain the identifier of the fourth network device based on the network slice information obtained by parsing the request for establishment of the session.

In some embodiments, determining the identifier of the fourth network device includes: The first network device selects, based on a locally configured selection policy, the fourth network device used for the request for establishment of the session; and the first network device determines the identifier of the selected fourth network device. In this manner, the first network device may select the fourth network device based on the locally configured selection policy. For example, the selected fourth network device may be a dedicated fourth network device set by the first network device for a terminal device that does not belong to a local network.

In some embodiments, the second network device obtains the identifier of the fourth network device in the visited network from a network repository function in the home network based on network slice information requested by the terminal device in the first message. In this manner, the first network device may send the request for establishment of the session to the second network device without parsing the request of the terminal device for establishment of the session, and the second network device obtains the identifier of the fourth network device, and sends the identifier of the fourth network device to the first network device in the second message.

In some embodiments, the second network device sends the identifier of the fourth network device and the request for establishment of the session to the third network device. In this manner, the second network device sends the identifier of the fourth network device to the third network device in the home network, the third network device performs necessary signaling exchange for session establishment with the fourth network device, and the third network device determines that the request for establishment of the session is accepted by a core network.

In some embodiments, the third network device sends third tunnel information at a user plane function in the home network to the fourth network device, where the third tunnel information is for identifying a second tunnel between the user plane function in the visited network and the user plane function in the home network. In this manner, the third tunnel information at the user plane function in the home network and fourth tunnel information at the user plane function in the visited network may be used at the fourth network device to identify (for example, establish) the second tunnel.

In some embodiments, the fourth network device sends the third tunnel information to the user plane function in the visited network; the fourth network device receives, from the user plane function in the visited network, first tunnel information and the fourth tunnel information that are at the user plane function in the visited network; and the user plane function in the visited network binds the third tunnel information to the fourth tunnel information, where the third tunnel information and the fourth tunnel information are for identifying the second tunnel. In this manner, the second tunnel used for a session may be identified (for example, established) at the user plane function in the visited network.

In some embodiments, the third network device receives the response message for establishment of the session from the fourth network device, where the response message for establishment of the session includes the first tunnel information and the fourth tunnel information. In this manner, the third network device may receive the first tunnel information and the fourth tunnel information that are respectively for identifying the first tunnel and the second tunnel, to establish a user plane transmission link used for the session of the terminal device.

In some embodiments, the accept message for establishment of the session includes the first tunnel information. In this manner, the second network device may obtain the first tunnel information at the user plane function in the visited network.

In some embodiments, the first network device sends the first tunnel information to the radio access network device, and the first network device receives, from the radio access network device, second tunnel information that is for establishing the first tunnel and that is at the radio access network device. In this manner, the second network device may use the first tunnel information and the second tunnel information that is at the radio access network device to identify (for example, establish) the first tunnel.

In some embodiments, the first network device sends the second tunnel information to the user plane function in the visited network based on the indication information via the fourth network device. In this manner, the first network device sends the second tunnel information to the user plane function in the visited network based on the indication information, to assist in establishing the first tunnel.

In some embodiments, the user plane function in the visited network binds the first tunnel information to the second tunnel information, and the first tunnel information and the second tunnel information are for identifying the first tunnel. In this manner, the first tunnel used for a session may be identified (for example, established) at the user plane function in the visited network.

In some embodiments, the first network device is an access and mobility management function (Access and mobility management function, AMF) in the visited network (visited AMF, vAMF), the second network device is an AMF in the home network (home AMF, hAMF), the third network device is a session management function (Session Management Function, SMF) in the home network (home SMF, hSMF), and the fourth network device is an SMF in the visited network (visited SMF, vSMF).

According to a fifth aspect, an embodiment of this disclosure provides a communication method. The method includes: A radio access network device sends a plurality of groups of tunnel information and a request of an intermediate network element for establishment of a session to a third network device in a home network of a terminal device based on the request received from the terminal device for establishment of the session; and the radio access network device receives an accept message for establishment of the session and a selected group of tunnel information in the plurality of groups of tunnel information from the third network device, where the accept message for establishment of the session indicates that the request for establishment of the session is accepted by the third network device, and the group of tunnel information includes first tunnel information and second tunnel information that are at the intermediate network element.

In this manner, an access network sharing-based UE session establishment solution is provided. In this solution, the intermediate network element is introduced in a visited network of the UE, to replace a vSMF and a user plane function (User Plane Function, UPF) in the visited network (visited UPF, vUPF), a data transmission tunnel in the visited network is established between a UPF in the home network (home UPF, hUPF) and a RAN, and a network device in the home network of the UE establishes and maintains a UE session, so that interoperability of the UE between different RATs between a shared access network and a home core network and session continuity when the UE moves between visited networks can be implemented.

In some embodiments, the first tunnel information at the intermediate network element and fourth tunnel information at the radio access network device are for identifying a first tunnel that is between the radio access network device and the intermediate network element and that is used for a session, and the second tunnel information at the intermediate network element and third tunnel information at a user plane function in the home network are for identifying a second tunnel that is between the intermediate network element and the user plane function in the home network and that is used for a session.

In some embodiments, the radio access network device configures the plurality of groups of tunnel information. For example, the radio access network device may configure the plurality of groups of tunnel information for the intermediate network element, and then the third network device in the home network of the terminal device selects a group of tunnel information from the plurality of groups of tunnel information for a session, to establish a user plane tunnel for the session.

In some embodiments, the radio access network device receives the third tunnel information at the user plane function in the home network from the third network device. In this manner, the radio access network device may obtain the third tunnel information at the user plane function in the home network, and then may send the third tunnel information to the intermediate network element, so that the intermediate network element establishes the second tunnel between the intermediate network element and the user plane function in the home network.

In some embodiments, the radio access network device binds the first tunnel information to the fourth tunnel information at the radio access network device. In this manner, the first tunnel between the radio access network device and the intermediate network element may be established.

In some embodiments, the radio access network device binds a session in the request for establishment of the session to the first tunnel and the second tunnel.

In some embodiments, the radio access network device sends a group of tunnel information, the third tunnel information, and the fourth tunnel information to the intermediate network element. In this manner, the intermediate network element may bind the first tunnel information to the fourth tunnel information, and bind the second tunnel information to the third tunnel information, to establish the first tunnel and the second tunnel.

According to a sixth aspect, an embodiment of this disclosure provides a communication method. The method includes: An intermediate network element in a visited network of a terminal device receives a group of tunnel information at the intermediate network element, third tunnel information at a user plane function in a home network of the terminal device, and fourth tunnel information at a radio access network device from the radio access network device, where the group of tunnel information includes first tunnel information and second tunnel information that are at the intermediate network element, the group of tunnel information is selected by a third network device in the home network from a plurality of groups of tunnel information at the intermediate network element, the plurality of groups of tunnel information are configured by the radio access network device, the first tunnel information and the fourth tunnel information are for identifying a first tunnel between the radio access network device and the intermediate network element, and the second tunnel information and the third tunnel information are for identifying a second tunnel between the intermediate network element and the user plane function in the home network; the intermediate network element binds the first tunnel information to the fourth tunnel information; and the intermediate network element binds the second tunnel information to the third tunnel information.

In this manner, an access network sharing-based UE session establishment solution is provided. In this solution, the intermediate network element is introduced in the visited network of the UE, to replace a vSMF and a vUPF, a data transmission tunnel in the visited network is established between an hUPF and a RAN, and a network device in the home network of the UE establishes and maintains a UE session, so that interoperability of the UE between different RATs between a shared access network and a home core network and session continuity when the UE moves between visited networks can be implemented.

According to a seventh aspect, an embodiment of this disclosure provides a communication method. The method includes: A third network device in a home network of a terminal device receives a plurality of groups of tunnel information at an intermediate network element in a visited network of the terminal device and a request of the terminal device for establishment of a session; the third network device selects a group of tunnel information from the plurality of groups of tunnel information based on the request for establishment of the session, where the group of tunnel information includes first tunnel information and second tunnel information that are at the intermediate network element; and the third network device sends an accept message for establishment of the session and the group of tunnel information to a radio access network device, where the accept message for establishment of the session indicates that the request for establishment of the session is accepted by the third network device.

In this manner, an access network sharing-based UE session establishment solution is provided. In this solution, the intermediate network element is introduced in the visited network of the UE, to replace a vSMF and a vUPF, a data transmission tunnel in the visited network is established between an hUPF and a RAN, and a network device in the home network of the UE establishes and maintains a UE session, so that interoperability of the UE between different RATs between a shared access network and a home core network and session continuity when the UE moves between visited networks can be implemented.

In some embodiments, the first tunnel information at the intermediate network element and fourth tunnel information at the radio access network device are for identifying a first tunnel that is between the radio access network device and the intermediate network element and that is used for a session, and the second tunnel information at the intermediate network element and third tunnel information at a user plane function in the home network are for identifying a second tunnel that is between the intermediate network element and the user plane function in the home network and that is used for a session.

In some embodiments, the third network device sends a group of tunnel information to the user plane function in the home network; and the third network device receives configuration complete information and the third tunnel information at the user plane function in the home network from the user plane function in the home network, where the configuration complete information indicates that the user plane function in the home network binds the second tunnel information to the third tunnel information.

In some embodiments, the third network device generates the accept message for establishment of the session based on the configuration complete information.

In some embodiments, the third network device sends the third tunnel information to the radio access network device. In this manner, the radio access network device may obtain the third tunnel information at the user plane function in the home network, and then sends the third tunnel information to the intermediate network element, so that the intermediate network element establishes the second tunnel between the intermediate network element and the user plane function in the home network.

In some embodiments, the third network device binds a session in the request for establishment of the session to the second tunnel.

According to an eighth aspect, an embodiment of this disclosure provides a network apparatus. The network apparatus includes a processor and a memory. The memory stores instructions, and when the instructions are executed by the processor, the network apparatus is caused to perform the method according to any one of the first aspect, the second aspect, the third aspect, the fifth aspect, the sixth aspect, the seventh aspect, or embodiments thereof.

According to a ninth aspect, an embodiment of this disclosure provides a communication system. The communication system includes: a first network device, configured to perform the method according to the first aspect or any embodiment of the first aspect; a second network device, configured to perform the method according to the second aspect or any embodiment of the second aspect; and a third network device, configured to perform the method according to the third aspect or any embodiment of the third aspect.

According to a tenth aspect, an embodiment of this disclosure provides a communication system. The communication system is configured to perform the method according to the fourth aspect or any embodiment of the fourth aspect.

According to an eleventh aspect, an embodiment of this disclosure provides a communication system. The communication system includes: a radio access network device, configured to perform the method according to the fifth aspect or any embodiment of the fifth aspect; an intermediate network element, configured to perform the method according to the sixth aspect or any embodiment of the sixth aspect; and a third network device, configured to perform the method according to the seventh aspect or any embodiment of the seventh aspect.

According to a twelfth aspect, an embodiment of this disclosure provides a chip. The chip includes a processing circuit, and the processing circuit is configured to perform operations of the method according to any one of the first aspect, the second aspect, the third aspect, the fourth aspect, the fifth aspect, the sixth aspect, the seventh aspect, or embodiments thereof.

According to a thirteenth aspect, an embodiment of this disclosure provides a computer-readable storage medium. The computer-readable storage medium stores instructions. When the instructions are executed by an apparatus, the apparatus is caused to perform operations of the method according to any one of the first aspect, the second aspect, the third aspect, the fourth aspect, the fifth aspect, the sixth aspect, the seventh aspect, or embodiments thereof.

According to a fourteenth aspect, an embodiment of this disclosure provides a computer program or a computer program product. The computer program or the computer program product is tangibly stored in a computer-readable medium and includes computer-executable instructions. When the computer-executable instructions are executed, an apparatus is caused to perform operations of the method according to any one of the first aspect, the second aspect, the third aspect, the fourth aspect, the fifth aspect, the sixth aspect, the seventh aspect, or embodiments thereof.

### BRIEF DESCRIPTION OF DRAWINGS

The foregoing and other features, advantages, and aspects of embodiments of this disclosure become more apparent with reference to accompanying drawings and the following detailed descriptions. Several implementations of this application are shown herein by way of an example but not a limitation. In the accompanying drawings:
FIG. 1A is a diagram of a network environment to which some embodiments of this disclosure may be applied;
FIG. 1B is a diagram of a roaming architecture to which some embodiments of this disclosure may be applied;
FIG. 2 is a signaling diagram of a communication process according to some embodiments of this disclosure;
FIG. 3A and FIG. 3B are a signaling diagram of a UE session establishment process according to some embodiments of this disclosure;
FIG. 4A and FIG. 4B are a signaling diagram of another UE session establishment process according to some embodiments of this disclosure;
FIG. 5A and FIG. 5B are a signaling diagram of another UE session establishment process according to some embodiments of this disclosure, in which a new intermediate network element is introduced in a visited network;
FIG. 6A is a diagram of an independent carrier access network scenario to which some embodiments of this disclosure may be applied;
FIG. 6B a diagram of a co-carrier access network scenario to which some embodiments of this disclosure may be applied;
FIG. 7 is a diagram of a roaming scenario to which some embodiments of this disclosure may be applied;
FIG. 8 is a flowchart of a communication process performed at a first network device according to some embodiments of this disclosure;
FIG. 9 is a flowchart of a communication process performed at a second network device according to some embodiments of this disclosure;
FIG. 10 is a flowchart of a communication process performed at a third network device according to some embodiments of this disclosure;
FIG. 11 is a flowchart of a communication process performed at a communication system according to some embodiments of this disclosure; and
FIG. 12 is a block diagram of an example device that may be used to implement an embodiment of this disclosure.

In the accompanying drawings, same or similar reference numerals indicate same or similar elements.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In this disclosure, the term "include" and similar terms thereof should be understood as non-exclusive inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of this disclosure may be implemented according to any appropriate communication protocol, including but not limited to cellular communication protocols such as 3rd generation (3rd Generation, 3G), 4th generation (4G), 5th generation (5G), and 6th generation (6G), a wireless local area network communication protocol such as the Institute of Electrical and Electronics Engineers (Institute of Electrical and Electronics Engineers, IEEE) 802.11, and/or any other protocols currently known or developed in the future.

The technical solutions of embodiments of this disclosure are applied to a communication system that complies with any appropriate communication protocol, for example, a general packet radio service (General Packet Radio Service, GPRS), a global system for mobile communications (Global System for Mobile Communications, GSM) system, an enhanced data rate for GSM evolution (Enhanced Data rate for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronization code division multiple access (Time Division-Synchronization Code Division Multiple Access, TD-SCDMA) system, a frequency division duplex (Frequency Division Duplex, FDD) system, a time division duplex (Time Division Duplex, TDD) system, a fifth generation system or a new radio (New Radio, NR) system, or a future evolved sixth generation communication system.

In this disclosure, the term "terminal device" refers to any terminal device that can perform wired or wireless communication with a network device or with each other. The terminal device sometimes may be referred to as user equipment (UE). The terminal device may be any type of mobile terminal, fixed terminal, or portable terminal. For example, the terminal device may include a mobile phone, a station, a unit, a device, a mobile terminal (Mobile Terminal, MT), a subscriber station, a portable subscriber station, an internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an internet of things (Internet of Things, IoT) device, a vehicle-mounted device, an aircraft, a VR device, an AR device, an MR device, a wearable device, any terminal device in a 5G network or an evolved public land mobile network (Public Land Mobile Network, PLMN), a wireless terminal in industrial control, another device that can be used for communication, or any combination thereof. This is not limited in embodiments of this disclosure.

In this disclosure, the term "network device" is an entity or a node that may be configured to communicate with a terminal device, for example, may be an access network device or a core network device. The access network device may be an apparatus that is deployed in an access network and that provides a communication function for the terminal. The access network device may be a RAN device, a wired access network device, a non-3GPP access network device, a 3GPP access network device, or the like. A main function of the RAN device is to provide a wireless connection, and the RAN device is located between the UE and a core network node. The access network device may include various types of base stations (Base Station, BS). For example, the access network device may include various forms of macro base stations, micro base stations, pico base stations, femto base stations, relay stations, access points, remote radio units (Remote Radio Unit, RRU), radio heads (Radio Head, RH), remote radio heads (Remote Radio Head, RRH), and the like. In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in the 5G network. In some scenarios, the access network device may include a central unit (Central Unit, CU) and/or a distributed unit (Distributed Unit, DU). The CU and DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in a same rack.

The core network device may be a network element (Network Function, NF), including: an AMF, responsible for user mobility management, mainly including non-access stratum signaling security termination, user registration management, reachability management, mobility management, N1/N2 interface signaling transmission, access authentication and authorization, and the like; an SMF, providing UE session management (such as session establishment, modification, and release), IP address allocation and management, UPF selection and UPF control, and the like; a UPF, providing user plane functions, such as user packet forwarding, handling interconnect to DN, session anchor, and quality of service (Quality of Service, QoS) policy enforcement; a network repository function (Network Repository Function, NRF), for example, providing registration and discovery capabilities for network elements in a network; a security edge protection proxy (Security Edge Protection Proxy, SEPP), providing signaling filtering and policies on inter-PLMN control plane interfaces, network element topology hiding within PLMN, and the like; a policy control function (Policy Control Function, PCF), a policy decision point, mainly providing rules such as service data flow and application detection, gate control, QoS, and charging control; a unified data management (Unified Data Management, UDM) function, mainly storing user subscription data; and a data network (Data Network, DN), including operator services, such as Internet access and a third-party service. The core network device may further include: a network exposure function (Network Exposure Function, NEF), supporting securely exposing services and capabilities provided by 3GPP network functions; an application function (Application Function, AF), supporting interacting with a 3GPP core network to provide services, to influence data flow routing, access network capability exposure, policy control, and the like; and a network data analytics function (Network Data Analytics Function, NWDAF), providing network data collection and analysis functions based on technologies such as big data and artificial intelligence. The core network device may further include other or newly defined network elements configured to implement any appropriate function.

For ease of description, in subsequent embodiments of this disclosure, the foregoing apparatuses that provide a wireless communication function for the terminal device may be collectively referred to as network devices.

In this disclosure, the term "tunnel" is a user plane transmission link used for data transmission between network devices, and may be identified by using tunnel information. For example, a tunnel before two network devices may be identified by using two pieces of tunnel information (that is, tunnel information at two ends of the tunnel) at the two network devices together. In this disclosure, "establishing a tunnel" may mean binding the two pieces of tunnel information that are for identifying the tunnel, for example, binding the tunnel information at two ends of the tunnel.

In some network sharing scenarios, a radio access network is shared in a plurality of operators, but there may be no direct connection between the shared radio access network and a participating core network. In terms of network sharing, some service requirements include: network sharing is transparent to a user, and a user terminal device displays only a name of a subscribed operator; a service provider of the terminal device is a subscribed operator of the terminal device; mobility management between sharing parties is supported; service continuity and quality of service (Quality of Service, QoS) between sharing parties are supported; and international roaming based on network sharing is supported.

Some embodiments of this disclosure may relate to independent carrier access network sharing, such as a multi-operator radio access network (Multi-Operator Radio Access Network, MORAN). For example, in this scenario, the shared RAN needs to be connected to a plurality of core networks (Core Network, CN). These CNs respectively belong to different operators. The operators may share access devices in the RAN, such as resources, for example, a base station. The operators do not share radio frequency resources but have own respective frequency license. The shared RAN determines, based on a cell on which the UE camps, a CN that provides a service for the UE, and UE subscribed by an operator can only camp on a cell of the operator.

Some embodiments of this disclosure may relate to co-carrier access network sharing, such as a multi-operator core network (Multi-Operator Core Network, MOCN). For example, in this scenario, the shared RAN needs to be connected to a plurality of CNs. These CNs respectively belong to different operators. The operators may share access devices in the RAN, such as resources, for example, a base station. Operators in sharing all access a same carrier frequency/cell and share air interface resources. The shared RAN needs to determine, based on an operator attribute (such as a mapping relationship between an international mobile subscriber identity (International Mobile Subscriber Identity, IMSI)/a temporary mobile subscriber identity (Temporary Mobile Subscriber Identity, TMSI) and the operator) of the UE, a CN that provides a service for the UE.

Roaming in some embodiments of this disclosure may be supported. For example, in this scenario, a visited network base station broadcasts a network number, and simultaneously accesses a local network user and a roaming user, to support 4G/5G interoperability of the visited network and 5G service continuity in the visited network. However, 4G/5G interoperability between the visited network and a home network, 5G service continuity between the visited network and the home network, and 5G service continuity between visited networks are not supported.

However, an access network sharing (for example, a MORAN and an MOCN) technology requires that direct physical connections exist between a CN of an operator that participates in sharing and the shared access network. In addition, the technology is mainly applied to a newly built site. However, for an existing site, if the solution is used, the site needs to be upgraded and an optical fiber needs to be laid, resulting in high costs. A roaming solution may not support the service requirements defined in a new scenario for interoperability (for example, between shared 5G and home 4G) between RATs and service continuity between visited networks.

Therefore, some embodiments of this disclosure provide an access network sharing-based UE session establishment solution. In this solution, a processing process of a shared UE session establishment request is transferred to a home network of the UE, so that interoperability of the UE between RATs (for example, between shared 5G and home 4G) and service continuity when the UE moves between different visited networks can be improved.

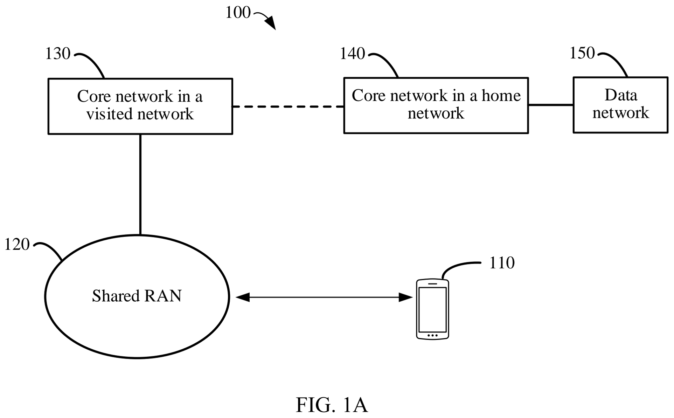

FIG. 1A is a diagram of a network environment 100 to which some embodiments of this disclosure may be applied. As shown in FIG. 1A, the network environment 100 may include a terminal device 110 (or represented as UE 110), a shared RAN 120, a core network 130 in a visited network of the UE 110, a core network 140 in a home network of the UE 110, and a data network 150 (or represented as a DN 150). The shared RAN 120 and the core network 130 in the visited network may belong to a same operator network, and are directly connected to each other. The core network 130 in the visited network and the core network 140 in the home network may not be directly connected to each other. The core network 130 in the visited network and the core network 140 in the home network may each include any quantity of network elements configured to implement various functions.

It may be understood that a quantity of devices and connections between the devices shown in FIG. 1A are only used for description and do not imply any limitation. The network environment 100 may include any appropriate quantity of devices suitable for implementing embodiments of this disclosure. For brevity of description, in this disclosure, "the visited network of the UE 110" is sometimes briefly described as "a visited network", and "the home network of the UE 110" is sometimes briefly described as "a home network".

In some embodiments, the core network 130 in the visited network of the UE 110 may include but is not limited to the following network elements (not shown): an AMF, an NRF, an SMF, a UPF, and a SEPP, which are respectively represented as a vAMF, a vNRF, a vSMF, a vUPF, and a vSEPP. The core network 140 in the home network of the UE 110 may include but is not limited to the following network elements (not shown): an AMF, an NRF, an SMF, a UPF, a SEPP, a UDM, and a PCF, which are respectively represented as an hAMF, an hNRF, an hSMF, an hUPF, an hSEPP, an hUDM, and an hPCF. It should be noted that the core network 130 in the visited network and the core network 140 in the home network may further include other conventional or newly defined network elements.

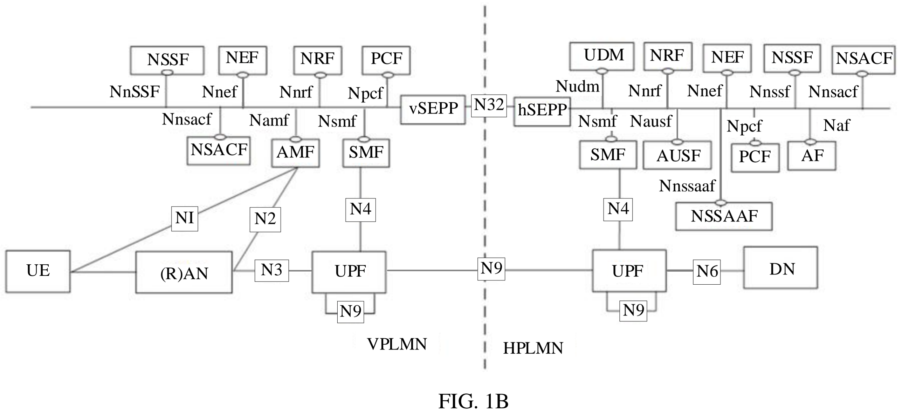

FIG. 1B is a diagram of a roaming architecture to which some embodiments of this disclosure may be applied. As shown in FIG. 1B, UE is connected to a RAN in a visited PLMN (Visited PLMN, VPLMN), and communicates with a home PLMN (Home PLMN, HPLMN) over the VPLMN. The VPLMN may include a core network 130 in a visited network shown in FIG. 1A, and the HPLMN may include a core network 140 in a home network shown in FIG. 1A.

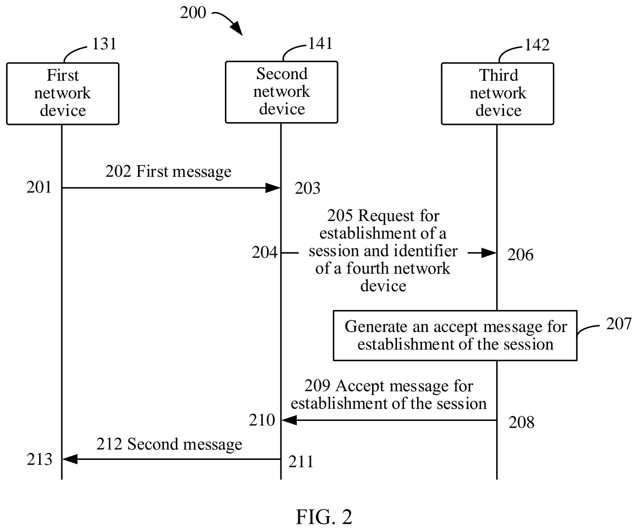

FIG. 2 is a signaling diagram of a communication process 200 according to some embodiments of this disclosure. For ease of understanding, FIG. 2 is described with reference to FIG. 1A. For example, the communication process 200 may relate to a first network device 131, a second network device 141, and a second network device 142. The first network device 131 may be a network element, for example, the vAMF, of the core network 130 in the visited network of the UE 110 shown in FIG. 1A, the second network device 141 may be a network element, for example, the hAMF, of the core network 140 in the home network of the UE 110 shown in FIG. 1A, and the third network device 142 may be a network element, for example, the hSMF, of the core network 140 in the home network of the UE 110 shown in FIG. 1A.

The communication process 200 may relate to a UE session establishment process. In the UE session establishment process, a user plane data transmission channel between UE (for example, the UE 110 shown in FIG. 1A) and a data network (for example, the data network 150 shown in FIG. 1A) may be established. The transmission channel may include a first tunnel between a RAN (for example, the RAN 120 shown in FIG. 1A) and the vUPF and a second tunnel between the vUPF and the hUPF. The first tunnel may be identified by using first tunnel information at the vUPF and second tunnel information at the RAN, and the second tunnel may be identified by using third tunnel information at the hUPF and fourth tunnel information at the vUPF.

As shown in FIG. 2, the first network device 131 (or represented as a vAMF 131) in the visited network (for example, the core network 130 in the visited network shown in FIG. 1A) of a terminal device (for example, the terminal device 110 shown in FIG. 1A) sends 201 a first message 202 to the second network device 141 (or represented as an hAMF 141) in the home network (for example, the core network 140 in the home network shown in FIG. 1A) of the terminal device based on a request received from the terminal device for establishment of a session. The first message 202 may include the request for establishment of the session. The second network device 141 receives 203 the first message 202.

In some embodiments, the first network device 131 may first determine an identifier of a fourth network device (for example, the vSMF) in the visited network before sending the first message, and include the identifier of the vSMF in the first message. The vSMF may be a network element in the core network 130 in the visited network of the UE 110 shown in FIG. 1A. The identifier of the vSMF may include information such as an address, an ID, or a URI of the vSMF. In an implementation, the first network device 131 may parse the request for establishment of the session, and obtain the identifier of the vSMF from the vNRF based on network slice information in the request for establishment of the session. Optionally or additionally, the first network device 131 may select, based on a locally configured selection policy, the vSMF used for the request for establishment of the session, and determine the identifier of the vSMF. For example, the first network device 131 may set a dedicated vSMF for a terminal device that does not belong to a local network.

Alternatively, the first network device 131 may not parse the request for establishment of the session. In this case, the first message does not include the identifier of the vSMF. In this case, the second network device 141 may parse the request for establishment of the session, and obtain the identifier of the vSMF from the hNRF based on the network slice information in the request for establishment of the session. In this case, the first device 141 may then determine the identifier of the vSMF from a second message received from the second network device 142.

Then, the second network device 141 may send 202 the request for establishment of the session and the identifier of the vSMF 205 to the third network device 142 in the home network. In some embodiments, after receiving the request for establishment of the session and the identifier of the vSMF, the third network device 142 may obtain the third tunnel information at the hUPF from the hUPF, and send the request for establishment of the session and the third tunnel information at the hUPF to the vSMF. As described above, the third tunnel information at the hUPF is for (for example, together with the fourth tunnel information at the vUPF) identifying the second tunnel between the vUPF and the hUPF. The third network device 142 may receive a response message for establishment of the session from the vSMF, where the response message for establishment of the session may include the first tunnel information and the fourth tunnel information that are at the vUPF, the first tunnel information is for (for example, together with the second tunnel information at the RAN) identifying the first tunnel between the RAN and the vUPF, and the fourth tunnel information is for (for example, together with the third tunnel information at the hUPF) identifying the second tunnel between the vUPF and the hUPF.

Still refer to FIG. 2. The third network device 142 generates 207 an accept message for establishment of the session based on the response message for establishment of the session. The accept message for establishment of the session indicates that the request of the UE for establishment of the session is accepted by the third network device 142, or that the request of the UE for establishment of the session is accepted by a home PLMN (home PLMN, hPLMN). Then, the third network device 142 sends 208 the accept message for establishment of the session 209 to the second network device 141, where the accept message for establishment of the session includes the first tunnel information at the vUPF. The second network device 141 receives 210 the accept message for establishment of the session 209.

Then, the second network device 141 sends 211 the second message 212 to the first network device 141, where the second message includes the accept message for establishment of the session, the accept message for establishment of the session indicates that the request of the UE for establishment of the session is accepted by the third network device 142, the second message further includes indication information, and the indication information indicates the first network device 131 to assist in establishing the first tunnel that is between the RAN and the vUPF and that is used for a session. The first network device 141 receives 213 the second message.

In some embodiments, the accept message for establishment of the session may include the first tunnel information at the vUPF. The first network device 141 may send the first tunnel information at the vUPF to the RAN, and receive the second tunnel information at the RAN from the RAN. The first tunnel information at the vUPF is for identifying the first tunnel between the RAN and the vUPF together with the second tunnel information at the RAN.

The first network device 141 sends the second tunnel information at the RAN to the vUPF via the vSMF based on the indication information in the second message, to assist in establishing the first tunnel that is between the RAN and the vUPF and that is used for the session.

In some embodiments, at the RAN and the vUPF, the first tunnel information at the vUPF and the second tunnel information at the RAN may be bound, to establish the first tunnel that is between the RAN and the vUPF and that is used for the UE session. At the vUPF and the hUPF, the third tunnel information at the hUPF and the fourth tunnel information at the vUPF may be bound, to establish the second tunnel that is between the vUPF and the hUPF and that is used for the UE session.

According to the foregoing embodiment of this disclosure, an access network sharing-based UE session establishment solution is provided. In this solution, session establishment is implemented via the home network (for example, specifically, the hAMF and the hSMF), so that interoperability of shared UE between RATs (for example, between shared 5G and home 4G) and session continuity when the shared UE moves between visited networks can be implemented.

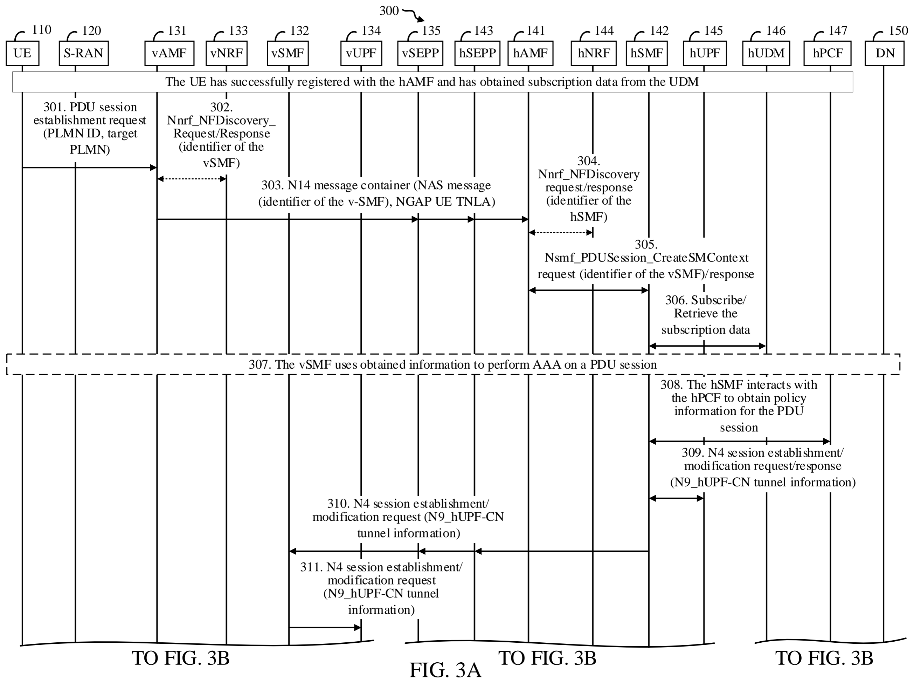

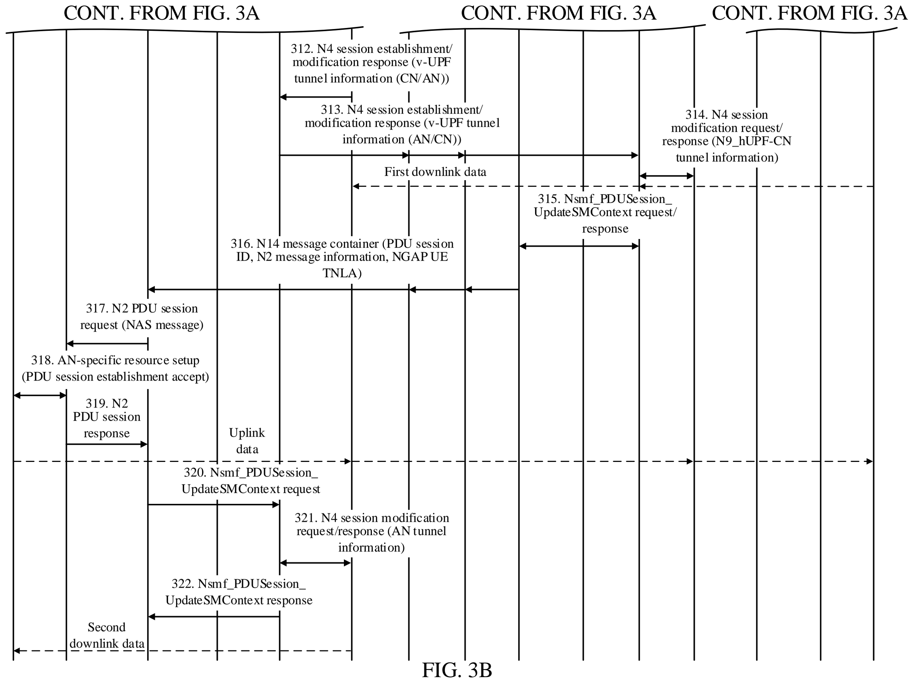

FIG. 3 A and FIG. 3B are a signaling diagram of a UE session establishment process 300 according to some embodiments of this disclosure. The process 300 may be an example implementation of the communication process 200 shown in FIG. 2. For ease of understanding, FIG. 3 A and FIG. 3B are described with reference to FIG. 1A and FIG. 2. For example, the process 300 may relate to the UE 110, the shared RAN 120 (S-RAN 120), and the data network 150 (DN 150) shown in FIG. 1A. The process 300 may further relate to the vAMF 131, the vSMF 132, the vNRF 133, the vUPF 134, and the vSEPP 135 in the core network 130 in the visited network shown in FIG. 1A, and the hAMF 141, the hSMF 142, the hSEPP 143, the hNRF 144, the hUPF 145, the hUDM 146, and the hPCF 147 in the core network 140 in the home network shown in FIG. 1A. The vAMF 131 may be an example of the first network device shown in FIG. 2, the hAMF 141 may be an example of the second network device shown in FIG. 2, and the hSMF 142 may be an example of the third network device shown in FIG. 2.

In the process 300, the vAMF 131 parses a non-access stratum (Non-Access Stratum, NAS) message. For example, the vAMF 131 may parse a request of the UE 110 for establishment of a session, but is not responsible for sending content of the NAS message to the vSMF 132. Instead, the vAMF 131 encapsulates the message and sends the message to the hAMF 141 through an N14 interface. The hAMF 141 is responsible for forwarding the NAS message to the hSMF 142, and the hSMF 142 is responsible for session establishment authentication, policy and charging control (Policy and Charging Control, PCC) selection, UPF selection, interaction with the vSMF 132, and the like.

As shown in FIG. 3 A and FIG. 3B, in 301, the vAMF 131 receives the request for establishment of the session from the UE 110.

In an implementation, the UE 110 sends the NAS message of the protocol data unit (Protocol Data Unit, PDU) session establishment request to the vAMF 131. For example, the NAS message may include the network slice information (for example, single network slice selection assistance information (Single Network Slice Selection Assistance Information, S-NSSAI)), a data network name (Data Network Name, DNN), a PDU session ID, a request type, an old PDU session ID, and an N1 session management (Session Management, SM) container. The N1 SM container may include the PDU session establishment request.

In 302, the vAMF 131 may obtain a user permanent identifier (Subscription Permanent Identifier, SUPI) of the UE 110 and a PLMN based on a parsed NAS message, and confirm that the message is a session registration request initiated by the inter-network roaming UE 110. The vAMF 131 checks a locally configured inter-network PLMN list, and confirms that the PLMN corresponding to the inter-network UE 110 is in an allowed PLMN list of the vAMF 131.

The vAMF 131 may determine an identifier of the vSMF 132. For example, the vAMF 131 obtains the identifier of the vSMF 132 from the vNRF 133 based on the network slice information in the request for establishment of the session. Optionally or additionally, the vAMF 131 selects, based on a locally configured selection policy, the vSMF 132 used for the request for establishment of the session, and determines the identifier of the selected vSMF 132.

In an implementation, the vAMF 131 obtains a PDU session ID of a session established by the UE 110 and the network slice information requested by the UE 110. The vAMF 131 obtains the identifier of the vSMF 132 from the vNRF 133 based on the network slice information provided by the UE 110, or the vAMF 131 may select, based on a locally configured vSMF selection policy, the dedicated vSMF 132 set by the vAMF 131 for the UE 110 that does not belong to a local network. The PDU session ID may then be associated with the selected vSMF 132, and the identifier of the vSMF 132 (for example, an address, an ID, or a URI of the vSMF 132) and the NAS message of the UE 110 are encapsulated together into an N14 message information container. The N14 message information container may include the PDU session ID, the identifier of the vSMF 132, N2 message information, and next generation application protocol (Next Generation Application Protocol, NGAP) UE transport network layer association (Transport Network Layer Association, TNLA) (NGAP UE TNLA). The PDU session ID is a PDU session ID provided in the NAS message when the UE 110 establishes the session. The vSMF 132 is a vSMF obtained by the vAMF 131 from the vNRF 133 based on the network slice information provided by the UE, or selected based on a local configuration. The NGAP UE TNLA is a UE-level NGAP tunnel used for sending a message between the RAN 120 and the vAMF 131 when the inter-network UE 110 performs an initial access or initiates a session request. The N2 message information may include UE location information and access type information that are obtained by the vAMF 131, and the NAS message sent by the UE. The NAS message may include the N1 SM container, and the N1 SM container may include the PDU session establishment request.

In 303, the vAMF 131 may send a first message to the hAMF 141, where the first message includes the request of the UE for establishment of the session. The first message may further include the identifier of the vSMF 132 determined by the vAMF 131.

In an implementation, the vAMF 131 may forward the request of the UE for establishment of the session and the identifier of the vSMF 132 to the hAMF 141 through the N14 interface.

In 304, the hAMF 141 may parse the received N14 message to obtain the request of the UE 110 for establishment of the session. The hAMF 141 finds the corresponding hNRF 144 based on the network slice information provided by the UE 110 or a local configuration. Then, the hAMF 141 may send an hSMF network element discovery request to the hNRF 144, and the hNRF 144 sends a matched hSMF or hSMF list to the hAMF 141.

In 305, the hAMF 141 may send the request for establishment of the session and the identifier of the vSMF 132 to the hSMF 142.

In an implementation, the hAMF 141 may select an hSMF 142 based on a local policy, and send the N1 SM container and the identifier of the vSMF 132 to the hSMF 142.

In 306, the hSMF 142 may interact with the hUDM 146 to obtain session management subscription data, including a user-allowed session and service continuity (Session and Service Continuity, SSC) mode, a session type, a default session parameter value, a subscribed session aggregation maximum bit rate, and the like.

In 307, optionally, the hSMF 142 and a third-party authentication, authorization, and accounting server in the DN 150 perform secondary authentication and authorization on the session.

In 308, the hSMF 142 may interact with the hPCF 147 to establish a session management policy connection, and obtain a session policy rule.

In 309, the hSMF 142 may obtain third tunnel information at the hUPF 145, where the third tunnel information is for (for example, together with fourth tunnel information at the vUPF 134) identifying a second tunnel that is between the vUPF 134 and the hUPF 145 and that is used for the session.

In an implementation, the hSMF 142 may select the hUPF 145 based on subscription data or a local configuration, configure session-related PCC policy information into the hUPF 145, and obtain the third tunnel information (for example, N9 tunnel information or N9 H-CN tunnel information) used by the hUPF 145 to transmit data. The third tunnel information may be allocated by the hUPF 145 or the hSMF 142.

In 310, the hSMF 142 may send the third tunnel information at the hUPF 145 to the vSMF 132.

In an implementation, the hSMF 142 sends the PDU session establishment request to the vSMF 132 based on the identifier of the vSMF 132 obtained from the vAMF 131. A request message may include the third tunnel information at the hUPF 145, and may further include the PCC policy information for session establishment, and the like.

In 311, the vSMF 132 may select the vUPF 134, and send the request for establishment of the session to the vUPF 134, where the request may include a session establishment rule and the third tunnel information at the hUPF 145.

In 312, the vUPF 134 may establish a data transmission tunnel, that is, the second tunnel, based on the third tunnel information at the hUPF 145, allocate the fourth tunnel information (for example, N9 tunnel information) and the first tunnel information (for example, N3 tunnel information) that are at the vUPF 134, and send the fourth tunnel information and the first tunnel information to the vSMF 132 in a response message for establishment of the session. The first tunnel information is for (for example, together with second tunnel information at the RAN 120) identifying a first tunnel between the RAN 120 and the vUPF 134 for the session.

In 313, the hSMF 142 may receive the response message for establishment of the session from the vSMF 132, where the response message for establishment of the session may include the first tunnel information and the fourth tunnel information that are at the vUPF 134.

In an implementation, the vSMF 132 sends the response message for establishment of the session to the hSMF 142, where the message includes the N3 tunnel information and the N9 tunnel information that are at the vUPF 134.

In 314, the hSMF 142 may configure the received fourth tunnel information at the vUPF 134 into the hUPF 145 by using a session update message.

In 315, the hSMF 142 may generate the accept message for establishment of the session based on the response message for establishment of the session, where the accept message for establishment of the session indicates that the request of the UE 110 for establishment of the session is accepted by the hSMF 142. Then, the hSMF 142 may send the accept message for establishment of the session to the hAMF 141. The accept message for establishment of the session may include the first tunnel information at the vUPF 134.

In an implementation, the hSMF 142 may encapsulate the first tunnel information at the vUPF 134 into the N1 SM container, and send the first tunnel information to the hAMF 141.

In 316, the hAMF 141 may send a second message to the vAMF 131, where the second message may include the accept message for establishment of the session and indication information, the accept message for establishment of the session indicates that the request of the UE for establishment of the session is accepted by the hSMF 142, and the indication information indicates the vAMF 131 to assist in establishing the first tunnel between the RAN 120 and the vUPF 134 for the session.

In an implementation, the hAMF 141 encapsulates the accept message for establishment of the session, the indication information, and the like into the second message (for example, the N14 message), and forwards the accept message for establishment of the session, the indication information, and the like to the vAMF 131. The indication information is used by the hAMF 141 to request the vAMF 131 to assist in establishing a user plane tunnel on a vPLMN side, for example, the first tunnel. The N14 message may further include the PDU session ID, the N2 message (including the N1 SM container), the NGAP UE TNLA, the identifier of the vSMF, and the like. The accept message for establishment of the session may include the first tunnel information at the vUPF 134.

In 317, the vAMF 131 may send the first tunnel information at the vUPF 134 to the RAN 120.

In an implementation, the vAMF 131 may parse the N14 message, and forward the N2 message in the message to the RAN 120.

In 318, a RAN 120 side may establish, based on content in the N2 message, a radio side bearer resource required for the session for the UE 110, configure the first tunnel information at the vUPF 134 in the N2 message into tunnel information on the RAN 120 side, and allocate the second tunnel information at the RAN 120, for example, a tunnel identifier AN tunnel info. The first tunnel information at the vUPF 134 and the second tunnel information at the RAN 120 are for identifying the first tunnel between the RAN 120 and the vUPF 134 for the session.

In 319, the vAMF 131 may receive the second tunnel information at the RAN 120 from the RAN 120. In an implementation, the RAN 120 side may send the allocated second tunnel information to the vAMF 131 by using an N2 PDU session response message.

Then, the vAMF 131 may send the second tunnel information to the vUPF 134 via the vSMF 132 based on the indication information, to assist in establishing the first tunnel.

In an implementation, in 320, the vAMF 131 sends, based on the indication information, the second tunnel information at the RAN 120 to the vSMF 132 by using a PDU session update message. Then, in 321, the vSMF 132 sends the second tunnel information at the RAN 120 to the vUPF 134, and the vUPF 134 configures the second tunnel information into an N3 interface tunnel of the vUPF 134, to complete configuration of a downlink data plane transmission tunnel.

In 322, the vUPF 134 may send a PDU session update acknowledgement message to the vSMF 131, to confirm that the data plane transmission tunnel is successfully established.

According to this embodiment, a processing process of the request of the shared UE for establishment of the session is transferred to the hAMF/hSMF. When the shared UE moves between RATs, for example, between shared 5G and home 4G, the hAMF/hSMF may obtain a regular session context in the shared 5G network and all information in the home 4G network, so that service continuity in an interoperation process can be effectively implemented. When the UE moves between different visited networks, service continuity between the different visited networks can still be implemented because session management is entirely completed by the home network.

In a conventional roaming scenario, session management of shared UE is completed by a vAMF/vSMF in a visited network, and a session context is stored in the vSMF in the visited network. Either the UE moving between a visited 5G network and a home 4G network or moving between visited networks belongs to inter-operator scenarios, and service continuity in the inter-operator scenarios cannot be implemented due to policy restrictions of different operators. In this embodiment, session management of the shared UE is completed by the hSMF in the home network. Either the shared UE moving between the visited 5G network and the home 4G network or moving between visited networks belongs to same-operator scenarios, and service continuity in these scenarios can be effectively implemented.

It should be noted that this disclosure is described by using a scenario in which the UE moves between the shared 5G and the home 4G as an example. However, this disclosure may alternatively be used in another scenario in which the UE moves between any appropriate RATs. This disclosure is not limited in this aspect.

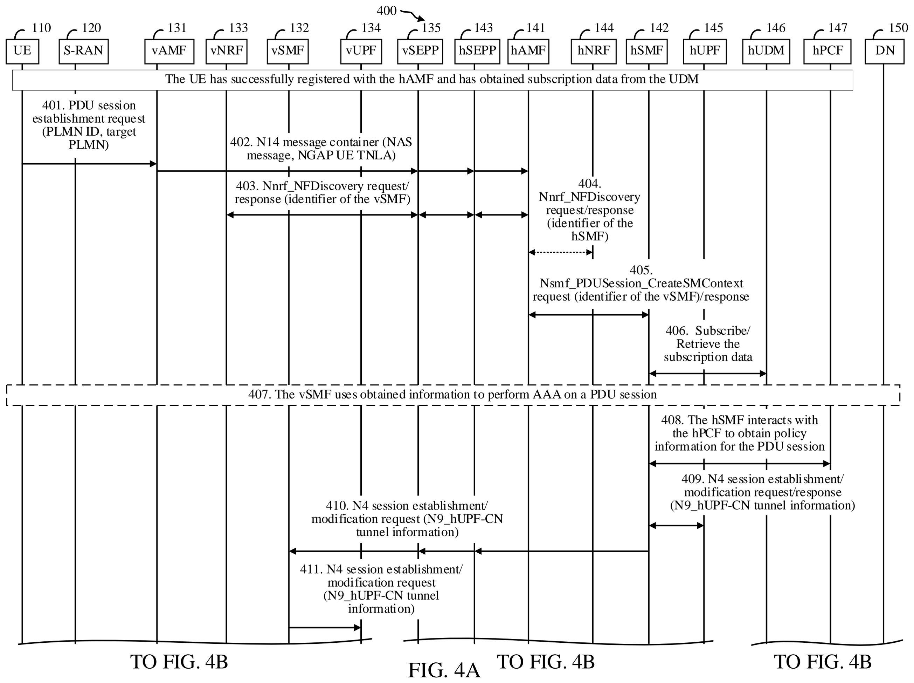

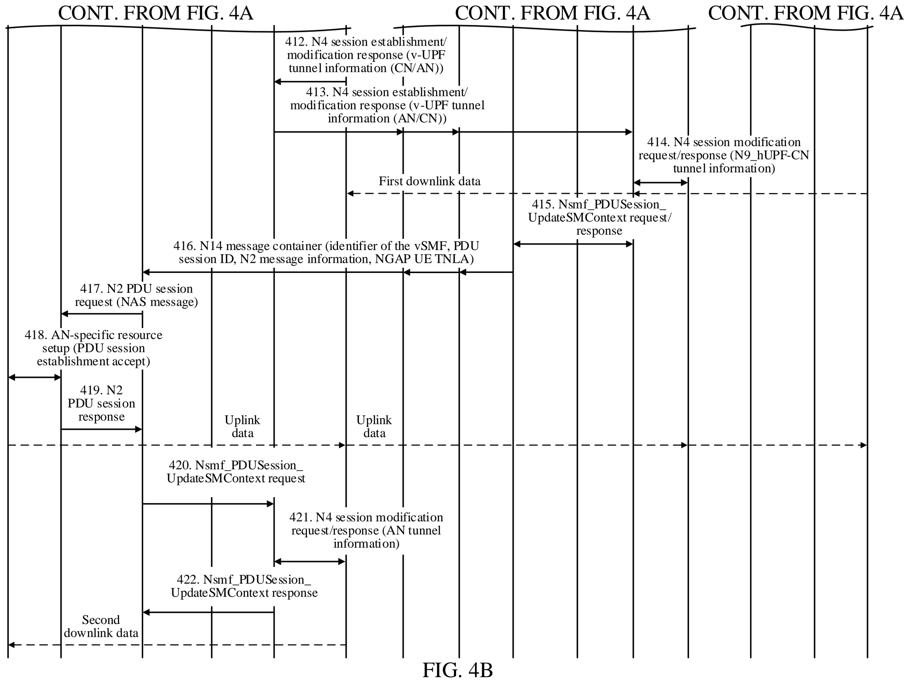

FIG. 4A and FIG. 4B are a signaling diagram of another UE session establishment process 400 according to some embodiments of this disclosure. The process 400 may be an example implementation of the communication process 200 shown in FIG. 2. For ease of understanding, FIG. 4A and FIG. 4B are described with reference to FIG. 1A and FIG. 2. For example, the process 400 may relate to the UE 110, the shared RAN 120 (S-RAN 120), and the data network 150 (DN 150) shown in FIG. 1A. The process 400 may further relate to the vAMF 131, the vSMF 132, the vNRF 133, the vUPF 134, and the vSEPP 135 in the core network 130 in the visited network shown in FIG. 1A, and the hAMF 141, the hSMF 142, the hSEPP 143, the hNRF 144, the hUPF 145, the hUDM 146, and the hPCF 147 in the core network 140 in the home network shown in FIG. 1A. The vAMF 131 may be an example of the first network device shown in FIG. 2, the hAMF 141 may be an example of the second network device shown in FIG. 2, and the hSMF 142 may be an example of the third network device shown in FIG. 2.

In the process 400, the vAMF 131 may not parse a NAS message. For example, the vAMF 131 may not parse a request of the UE 110 for establishment of a session. The vAMF 131 may determine, based on a PLMN in the N2 message sent by the RAN 120, that the UE 110 is inter-network UE, encapsulate the message, and send the message to the hAMF 141 through an N14 interface. The hAMF 141 is responsible for forwarding the NAS message to the hSMF 142, and the hSMF 142 is responsible for session establishment authentication, policy and charging control (Policy and Charging Control, PCC) selection, UPF selection, interaction with the vSMF 132, and the like.

As shown in FIG. 4A and FIG. 4B, in 401, the vAMF 131 receives the request from the UE 110 for establishment of the session.

In an implementation, the UE 110 may send, on an NGAP UE TNLA tunnel, a NAS message of the request for establishment of the session to the vAMF 131 via the RAN 120. For example, the NAS message may include network slice information (for example, S-NSSAI), a DNN, a PDU session ID, a request type, an old PDU session ID, and an N1 SM container. The N1 SM container may include the PDU session establishment request.

In 402, the vAMF 131 may determine, based on a target PLMN in the N2 message sent by the RAN 120, that the message belongs to the shared inter-network UE 110. Therefore, the vAMF 131 packages the N2 message or the NAS message and NGAP UE TNLA into an N14 message container, and forwards the message (for example, a first message) to the hAMF 141.

In 403, the hAMF 141 may parse the received N14 message to obtain content in the NAS message. The hAMF 141 sends an hSMF network element discovery request to the hNRF 144 based on the network slice information provided by the UE 110 in the NAS message or a local configuration, to obtain an identifier of the vSMF 132.

In 404, the hAMF 141 may obtain the identifier of the vSMF 132 from the hNRF 144 based on the network slice information requested by the UE 110 in the first message.

In an implementation, the hAMF 141 may send the hSMF network element discovery request to the hNRF 144, and obtain the identifier of the vSMF 132.

In 405, the hAMF 141 may send the request for establishment of the session and the identifier of the vSMF 132 to the hSMF 142.

In an implementation, the hAMF 141 may send the N1 SM container and the identifier of the vSMF 132 to the hSMF 142 by using the PDU session establishment request.

In 406 to 415, a process similar to that in 306 to 315 is performed. For brevity, details are not described herein again.

In 416, the hAMF 141 may send a second message to the vAMF 131, where the second message may include an accept message for establishment of the session and indication information, the accept message for establishment of the session indicates that the request of the UE for establishment of the session is accepted by the hSMF 142, and the indication information indicates the vAMF 131 to assist in establishing a first tunnel between the RAN 120 and the vUPF 134 for the session.

In an implementation, the hAMF 141 encapsulates the accept message for establishment of the session, the indication information, and the like into the second message (for example, the N14 message), and forwards the accept message for establishment of the session, the indication information, and the like to the vAMF 131. The indication information is used by the hAMF 141 to request the vAMF 131 to assist in establishing a user plane tunnel on a vPLMN side, for example, the first tunnel. The N14 message may further include the identifier of the vSMF, the PDU session ID, the N2 message, the NGAP UE TNLA, and the like. The accept message for establishment of the session may include first tunnel information at the vUPF 134.

In 417, the vAMF 131 may send the first tunnel information at the vUPF 134 to the RAN 120.

In an implementation, the vAMF 131 may parse the N14 message, obtain the identifier of the vSMF, the PDU session ID, the indication information, and the like, and forward the N2 message to the RAN 120.

In 418, a RAN 120 side may establish, based on content in the N2 message, a radio side bearer resource required for the session for the UE 110, configure the first tunnel information at the vUPF 134 in the N2 message into tunnel information on the RAN 120 side, and allocate second tunnel information at the RAN 120, for example, a tunnel identifier AN tunnel info. The first tunnel information at the vUPF 134 and the second tunnel information at the RAN 120 are for identifying the first tunnel between the RAN 120 and the vUPF 134 for the session.

In 419, the vAMF 131 may receive the second tunnel information at the RAN 120 from the RAN 120. In an implementation, the RAN 120 side may send the allocated second tunnel information to the vAMF 131 by using an N2 PDU session response message.

Then, the vAMF 131 may send the second tunnel information to the vUPF 134 via the vSMF 132 based on the indication information, to assist in establishing the first tunnel.

In an implementation, in 420, the vAMF 131 sends, based on the indication information by using a PDU session update message, the second tunnel information at the RAN 120 to the vSMF 132 specified by the identifier of the vSMF 132. Then, in 421, the vSMF 132 determines, based on the PDU session ID, the vUPF 134 corresponding to the PDU session, and sends the second tunnel information at the RAN 120 to the vUPF 134 by using the PDU session update message, to complete configuration of a user plane data tunnel of the vUPF 134.

In 422, the vUPF 134 may notify the vSMF 131 that the configuration of the data plane transmission tunnel is completed.

According to this embodiment, a processing process of the request of the shared UE for establishment of the session is transferred to the hAMF/hSMF. When the shared UE moves between RATs, for example, between shared 5G and home 4G, the hAMF/hSMF may obtain a regular session context in the shared 5G network and all information in the home 4G network, so that service continuity in an interoperation process can be effectively implemented. When the UE moves between different visited networks, service continuity between the different visited networks can still be implemented because session management is entirely completed by the home network.

In this embodiment, the vAMF does not need to parse the NAS message, and only needs to forward a message of the UE to the home hAMF based on the target PLMN provided by the RAN. The hAMF completes UE-related mobility management, and the hSMF completes session-related management. A context of the UE is stored in the home network. Interoperability of the UE between the shared 5G and the home 4G can be effectively implemented, and service continuity when the UE moves between different visited networks is maintained.

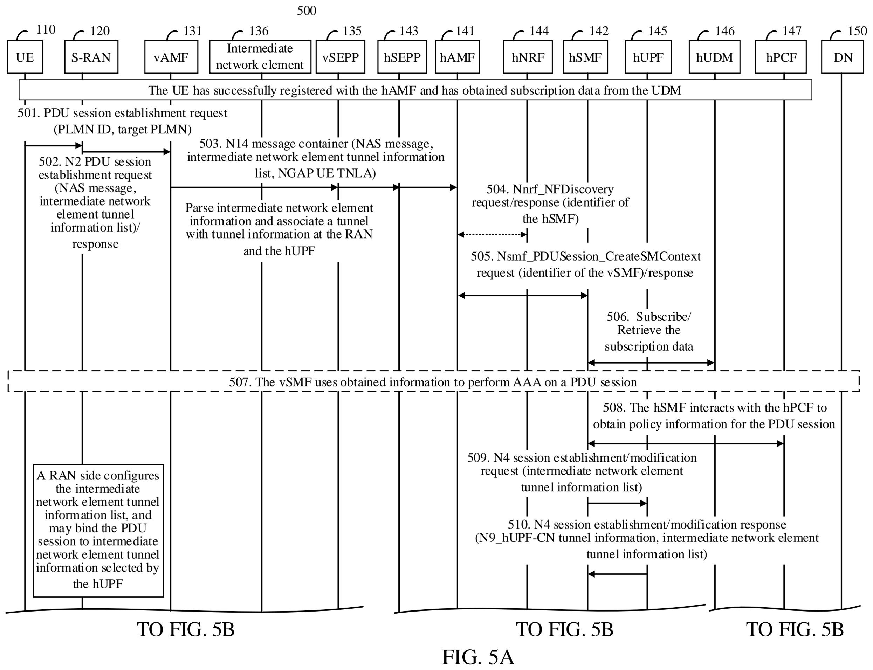

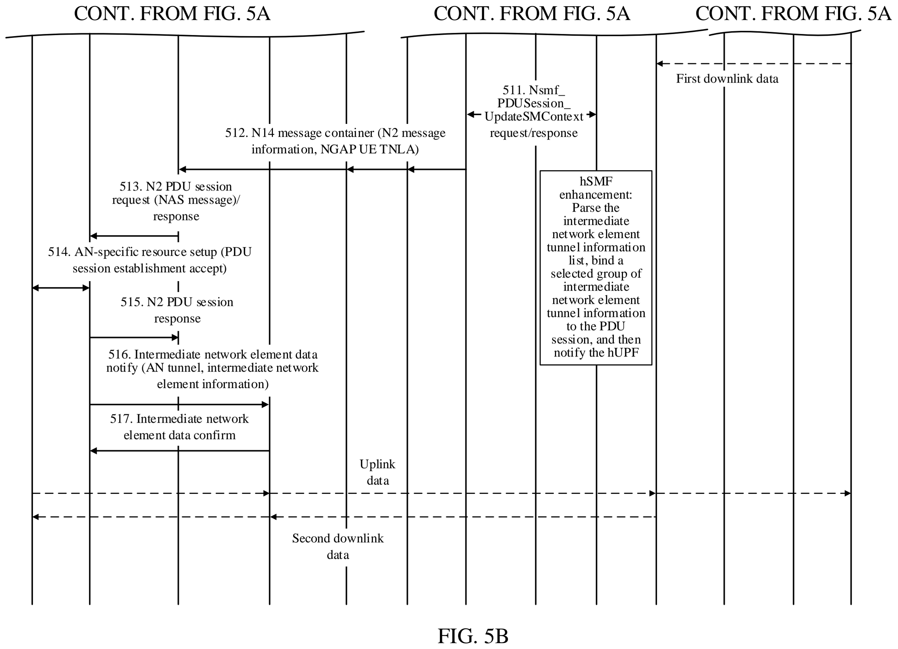

FIG. 5 A and FIG. 5B are a signaling diagram of another UE session establishment process 500 according to some embodiments of this disclosure, in which a new intermediate network element 136 is introduced in a visited network. The process 500 may relate to the UE 110, the shared RAN 120 (S-RAN 120), and the data network 150 (DN 150) shown in FIG. 1A. The process 500 may further relate to the vAMF 131, the vNRF 133, and the vSEPP 135 in the core network 130 in the visited network shown in FIG. 1A, and the hAMF 141, the hSMF 142, the hSEPP 143, the hNRF 144, the hUPF 145, the hUDM 146, and the hPCF 147 in the core network 140 in the home network shown in FIG. 1A. The process 500 may further relate to a new intermediate network element 136 that replaces the vSMF 132 and the vUPF 134 in FIG. 3 A and FIG. 3B and FIG. 4A and FIG. 4B, and the intermediate network element may also be referred to as a relay router (Relay router).

The communication process 500 may relate to a UE session establishment process. In the UE session establishment process, a user plane data transmission channel between the UE 110 and the DN 150 may be established. The transmission channel may include a first tunnel between the RAN 120 and the intermediate network element 136 and a second tunnel between the intermediate network element 136 and the hUPF 145. The first tunnel may be identified by using first tunnel information at the intermediate network element 136 and fourth tunnel information at the RAN 120, and the second tunnel may be identified by using second tunnel information at the intermediate network element 136 and third tunnel information at the hUPF 145.

In the process 500, the new intermediate network element 136 is introduced to replace the vSMF and the vUPF, and a data transmission tunnel in the visited network is established between the hUPF 145 and the RAN 120. In addition, a function of the RAN 120 is enhanced, to manage tunnel information at the intermediate network element 136.

In 501, the UE 110 may send a request for establishment of a session to the RAN 120.

The RAN 120 may configure a plurality of groups of tunnel information at the intermediate network element 136. The RAN 120 may send the plurality of groups of tunnel information at the intermediate network element 136 and the request for establishment of the session to the hAMF 141 based on the request received from the UE 110 for establishment of the session.

In an implementation, in 502, the RAN 120 may determine, based on a UE ID, to send uplink data to the intermediate network element 136. The RAN 120 encapsulates the plurality of groups of stored tunnel information at the intermediate network element into N2 message information, and sends, to the vAMF 131, the N2 message information together with a NAS message received from the UE 110. The plurality of groups of tunnel information at the intermediate network element may be an intermediate network element tunnel information list (relay router tunnel list), and may include the first tunnel information (for example, an AN tunnel) and the second tunnel information (for example, a CN tunnel). The N2 message information may include an N1 SM container (for example, the NAS message) and the intermediate network element tunnel information list. Then, in 503, the vAMF 131 may send the message to the hAMF 141 through an N14 message container (for example, including the N2 message information, NGAP UE TNLA, and the like).

In 504, the hAMF 141 may parse the received N14 message. The hAMF 141 may discover the hSMF 142 through a network element discovery function of the hNRF 144 based on S-NSSAI or a DNN in the NAS message, or a local configuration policy.

In 505, the hSMF 142 receives the plurality of groups of tunnel information at the intermediate network element and the request of the UE for establishment of the session.

In an implementation, the hAMF 141 sends the N1 SM container in the N2 message and the plurality of groups of tunnel information at the intermediate network element to the hSMF 142 together.

In 506 to 508, a process similar to that in 306 to 308 is performed. For brevity, details are not described herein again.

In 509, the hSMF 142 selects a group of tunnel information from the plurality of groups of tunnel information at the intermediate network element based on the request for establishment of the session, where the group of tunnel information includes the first tunnel information (for example, the AN tunnel) and the second tunnel information (for example, the CN tunnel) that are at the intermediate network element. The hSMF 142 sends the selected group of tunnel information to the hUPF 145.

In an implementation, the hSMF 142 discovers the hUPF 145, selects a group of tunnel information from the plurality of groups of tunnel information at the intermediate network element, and configures the group of tunnel information and N6 tunnel information into the hUPF 145.

In 510, the hSMF 142 receives configuration complete information and the third tunnel information at the hUPF 145 from the hUPF 145, where the configuration complete information indicates that the hUPF 145 has bound the second tunnel information and the third tunnel information.

In an implementation, the hUPF 145 returns the configuration complete and the third tunnel information at the hUPF 145.

The hSMF 142 generates an accept message for establishment of the session based on the configuration complete information, where the accept message for establishment of the session indicates that the request of the UE 110 for establishment of the session is accepted by the hSMF 142. The hSMF 142 sends the third tunnel information at the hUPF 145 to the RAN 120. The hSMF 142 further binds a session in the request for establishment of the session to the second tunnel.

In an implementation, in 511, the hSMF 142 encapsulates the third tunnel information at the hUPF 145 into intermediate network element information (including the selected group of tunnel information at the intermediate network element and the third tunnel information at the hUPF 145), and sends the third tunnel information to the hAMF 141. Then, in 512 and 513, the hAMF 141 sends the N2 information to the RAN 120, and the RAN 120 determines, based on the N2 information, that the PDU session is successfully established on an HPLNM side.

In 514 and 515, radio bearer resource allocation with the UE 110 is completed.

The RAN 120 may bind the first tunnel information at the intermediate network element to the fourth tunnel information at the RAN 120, to establish the first tunnel between the RAN 120 and the intermediate network element 136. The RAN 120 may bind the session in the request for establishment of the session to the first tunnel and the second tunnel. The RAN 120 may send the selected group of tunnel information at the intermediate network element 136, the third tunnel information at the hUPF 145, and the fourth tunnel information at the RAN 120 to the intermediate network element 136.

In an implementation, in 516, the RAN 120 binds the fourth tunnel information allocated by a RAN 120 side to the first tunnel information received at the intermediate network element 136 in the N2 message, and configures the intermediate network element information, the third tunnel information at the hUPF 145, and the fourth tunnel information on the RAN 120 side into the intermediate network element 136 by using an intermediate network element data notify (Relay router data notify) message.

In 517, the intermediate network element 136 binds the first tunnel information to the fourth tunnel information, and binds the second tunnel information to the third tunnel information.

In an implementation, the intermediate network element 136 selects a tunnel and confirms a binding relationship of the tunnel based on the received information. Establishment of the data transmission tunnel between the RAN 120 side and the hUPF 145 is completed.

In this embodiment, the RAN side may configure a dedicated intermediate network element tunnel information list, and may bind the PDU session to a tunnel identified by using the intermediate network element tunnel information selected by the hUPF. In addition, the RAN side can send and receive an intermediate network element data notify/confirm (Relay router data notify/confirm) message, parse content of the message, and encapsulate tunnel information at the hUPF in the intermediate network element information into the N2 message information. The intermediate network element may parse the intermediate network element information, receive the intermediate network element data notify message sent by the RAN side, associate the tunnel with tunnel information at the RAN and the hUPF, and bind the tunnel to the tunnel information at the RAN and the hUPF. The hSMF is enhanced to parse the intermediate network element tunnel information list, binds the selected group of intermediate network element information to the PDU session, and then notifies the hUPF.

According to this embodiment, the new intermediate network element is introduced. The network element is a network element that is in the visited network and that is dedicated for establishing a user plane data transmission tunnel with the home network for the inter-network UE. The network element is introduced, data of a local network user and data of an inter-network user can be effectively distinguished, a processing procedure of the data of the inter-network user can be simplified, and impact on signaling in the visited network can be reduced. In this solution, the home network controls mobility and session management, and the like of the UE. Interoperability of the UE between the shared 5G and the home 4G and service continuity when the UE moves between visited networks can be implemented.

According to the foregoing embodiments of this disclosure, based on a roaming architecture, when the inter-network UE accesses a shared access network to establish a session, a network element in the home network has functions such as controlling mobility management and session management related to the UE, and the visited network is responsible for forwarding data of the UE to the home network, and completing session establishment and data transmission based on a related policy management configuration network element in the home network.

In embodiments of this disclosure, the vAMF may encapsulate the N2 message information, the NGAP UE TNLA, and the identifier of the vSMF into the N14 message sent to the hAMF. The hAMF may parse the N14 message, obtain the identifier of the vSMF, and notify the hSMF of the identifier of the vSMF. The hSMF establishes signaling exchange with the vSMF based on the identifier, to complete forwarding and configuration of a policy for session establishment. The hAMF may send the N2 message information, the NGAP UE TNLA, the PDU session ID, and the identifier of the vSMF to the vAMF, and the vAMF completes establishment of a user plane tunnel in the visited network based on the received identifier of the vSMF. In embodiments of this disclosure, an access network sharing-based method in which UE implements session establishment via a home AMF/SMF is provided. In the method, interoperability of the shared UE between RATs, for example, between shared 5G and home 4G, and session continuity when the shared-UE moves between visited networks can be implemented.

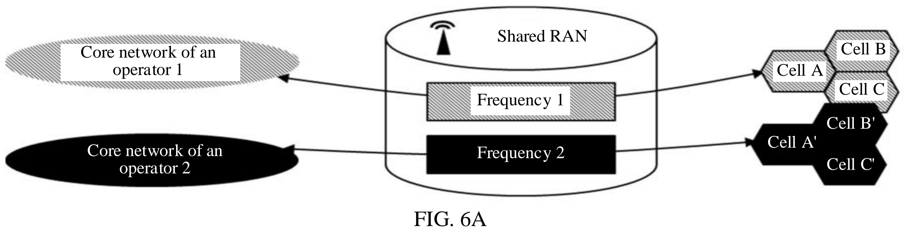

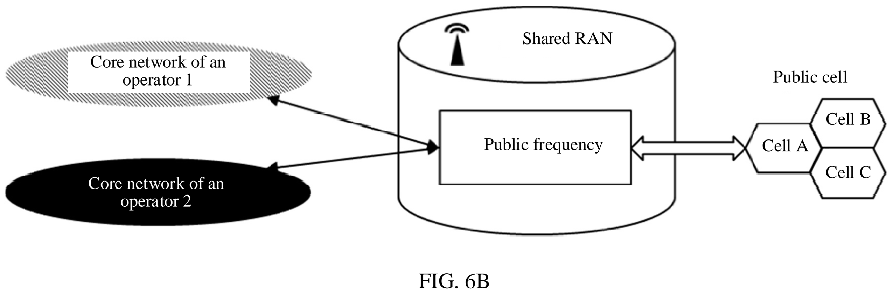

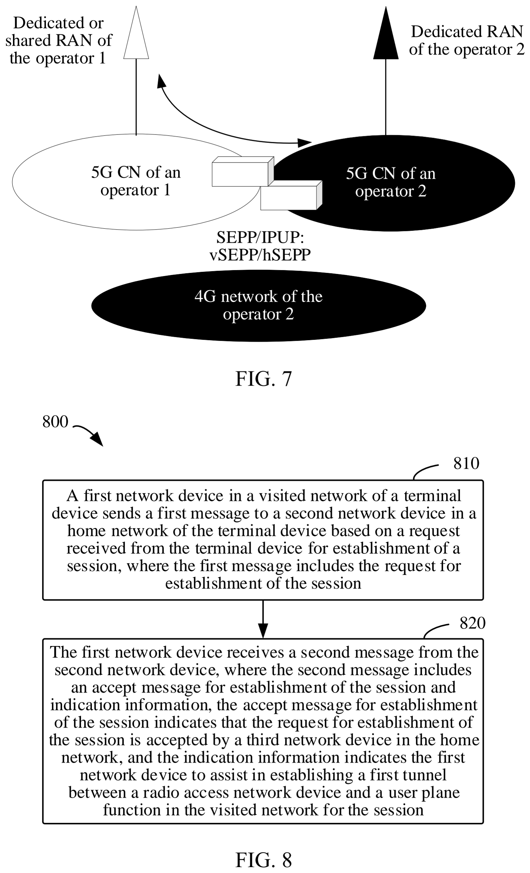

Embodiments of this disclosure may be applied to various scenarios. Several example scenarios to which embodiments of this disclosure may be applied are described below with reference to FIG. 6A, FIG. 6B, and FIG. 7 in an example manner.

FIG. 6A is a diagram of an independent carrier access network scenario (for example, a MORAN) to which some embodiments of this disclosure may be applied. In this scenario, a shared RAN needs to be connected to a plurality of core networks. These CNs respectively belong to different operators, for example, a core network of an operator 1 and a core network of an operator 2 shown in FIG. 6A. The operator 1 and the operator 2 may share access devices in the RAN, such as resources, for example, a base station, but do not share radio frequency resources, and have own respective frequency license. For example, the operator 1 corresponds to a frequency 1, and the operator 2 corresponds to a frequency 2.

In a conventional MORAN scenario, it is required that direct physical connections exist between all CNs of operators (for example, the core network of the operator 1 and the core network of the operator 2) that participate in sharing and the shared RAN. If this solution is used for an existing site, the site needs to be upgraded and an optical fiber needs to be laid, resulting in high costs. According to an access network sharing-based UE session establishment solution provided in this embodiment of this disclosure, a home network of the UE may establish and manage a UE session, and a core network in the home network of the UE does not need to be directly physically connected to the shared RAN (that is, a RAN in a visited network of the UE). This solution is applicable to a newly built RAN site and an existing RAN site. The existing site does not need to be upgraded and an optical fiber does not need to be laid, thereby reducing costs.

FIG. 6B is a diagram of a co-carrier access network scenario (for example, an MOCN) to which some embodiments of this disclosure may be applied. In this scenario, a shared RAN is connected to a plurality of CNs. These CNs respectively belong to different operators (for example, a core network of an operator 1 and a core network of an operator 2). The operators may share access devices in the RAN, such as resources, for example, a base station. Operators in sharing all access a same carrier frequency/cell, for example, a public frequency shown in FIG. 6B, and share air interface resources.

Similar to the MORAN scenario, in a conventional MOCN scenario, it is required that direct physical connections exist between all CNs of operators that participate in sharing and the shared RAN. The existing site needs to be upgraded and an optical fiber needs to be laid, resulting in high costs. An access network sharing-based UE session establishment solution provided in embodiments of this disclosure is applied to the MOCN scenario, and a core network in a home network of UE does not need to be directly physically connected to the shared RAN, thereby reducing site upgrade costs.

FIG. 7 is a diagram of a roaming scenario to which some embodiments of this disclosure may be applied. In this scenario, 4G/5G interoperability between a visited network and a home network is not supported, and service continuity between visited networks is not supported. According to an access network sharing-based UE session establishment solution provided in this embodiment of this disclosure, a processing process of a request of shared UE for establishment of a session is transferred to a home network of the UE, so that interoperability of the shared UE between RATs (for example, between shared 5G and home 4G) and session continuity when the shared UE moves between visited networks can be implemented.

FIG. 8 is a flowchart of a communication process 800 performed at a first network device according to some embodiments of this disclosure. For ease of understanding, FIG. 8 is described with reference to FIG. 2 to FIG. 4A and FIG. 4B. For example, the communication process 800 may be performed at the first network device (vAMF) 131 shown in FIG. 2 to FIG. 4A and FIG. 4B.

In 810, the first network device (for example, the vAMF 131) in a visited network of a terminal device sends a first message to a second network device (for example, an hAMF 141) in a home network of the terminal device based on a request received from the terminal device for establishment of a session, where the first message includes the request for establishment of the session.

In 820, the first network device receives a second message from the second network device, where the second message includes an accept message for establishment of the session and indication information, the accept message for establishment of the session indicates that the request for establishment of the session is accepted by a third network device (for example, an hSMF 142) in the home network, and the indication information indicates the first network device to assist in establishing a first tunnel between a radio access network device (for example, a RAN 120) and a user plane function (for example, a vUPF 134) in the visited network for a session.

In some embodiments, the accept message for establishment of the session includes first tunnel information that is for establishing the first tunnel and that is at the user plane function in the visited network. In some embodiments, the first network device further sends the first tunnel information to the radio access network device. In addition, the first network device receives, from the radio access network device, second tunnel information that is for establishing the first tunnel and that is at the radio access network device.

In some embodiments, the first network device sends the second tunnel information to the user plane function in the visited network based on the indication information via a fourth network device (for example, a vSMF 132) in the visited network, where the first tunnel information and the second tunnel information are for identifying the first tunnel.

In some embodiments, the first network device determines an identifier of the fourth network device before sending the first message, where the first message includes the identifier of the fourth network device. In some embodiments, the first network device obtains the identifier of the fourth network device from a storage function device (for example, a vNRF 133) in the visited network based on network slice information in the request for establishment of the session. In some embodiments, the first network device selects, based on a locally configured selection policy, the fourth network device used for the request for establishment of the session; and the first network device determines the identifier of the selected fourth network device.

Optionally, the first network device determines the identifier of the fourth network device from the second message. When the first network device does not parse the request of the terminal device for establishment of the session, the identifier of the fourth network device is obtained by the second network device from the storage function device in the visited network.

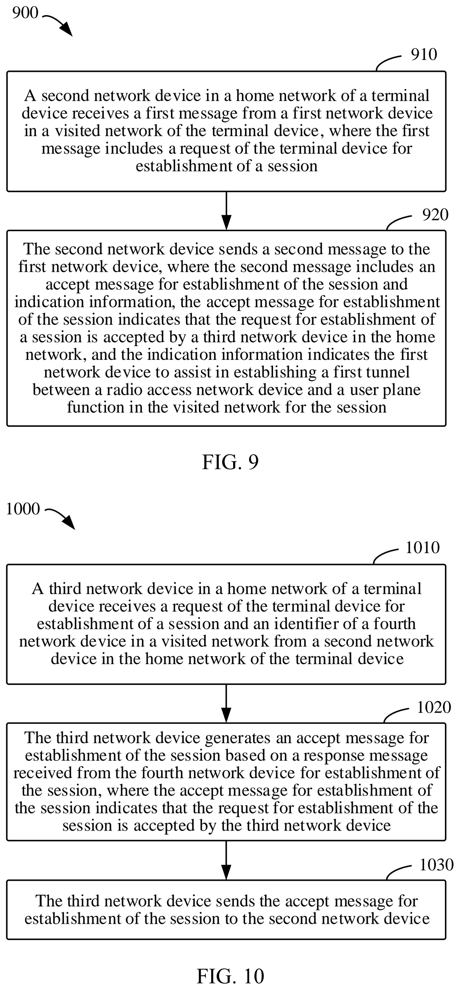

FIG. 9 is a flowchart of a communication process 900 performed at a second network device according to some embodiments of this disclosure. For ease of understanding, FIG. 9 is described with reference to FIG. 2 to FIG. 4A and FIG. 4B. For example, the communication process 900 may be performed at the second network device (hAMF) 141 shown in FIG. 2 to FIG. 4A and FIG. 4B.

In 910, the second network device in a home network of a terminal device receives a first message from a first network device in a visited network of the terminal device, where the first message includes a request of the terminal device for establishment of a session.

In 910, the second network device sends a second message to the first network device, where the second message includes an accept message for establishment of the session and indication information, the accept message for establishment of the session indicates that the request for establishment of the session is accepted by a third network device in the home network, and the indication information indicates the first network device to assist in establishing a first tunnel between a radio access network device and a user plane function in the visited network for the session.

In some embodiments, the first message includes an identifier of a fourth network device in the visited network. Optionally, when the first network device does not parse the request of the terminal device for establishment of the session, the second network device obtains the identifier of the fourth network device in the visited network from a network repository function (for example, an hNRF 144) in the home network based on network slice information requested by the terminal device in the first message.

In some embodiments, the second network device sends the identifier of the fourth network device and the request for establishment of the session to the third network device in the home network. In some embodiments, the second network device receives the accept message for establishment of the session from the third network device, where the accept message for establishment of the session is generated by the third network device based on a response message received from the fourth network device for establishment of the session.

In some embodiments, the accept message for establishment of the session includes first tunnel information at the user plane function in the visited network, and the first tunnel information is for identifying the first tunnel.

FIG. 10 is a flowchart of a communication process 1000 performed at a third network device according to some embodiments of this disclosure. For ease of understanding, FIG. 10 is described with reference to FIG. 2 to FIG. 4A and FIG. 4B. For example, the communication process 1000 may be performed at the third network device (hSMF) 142 shown in FIG. 2 to FIG. 4A and FIG. 4B.

In 1010, a third network device in a home network of a terminal device receives a request of the terminal device for establishment of a session and an identifier of a fourth network device in a visited network from a second network device in the home network of the terminal device.

In 1020, the third network device generates an accept message for establishment of the session based on a response message received from the fourth network device for establishment of the session, where the accept message for establishment of the session indicates that the request for establishment of the session is accepted by the third network device. In 1030, the third network device sends the accept message for establishment of the session to the second network device.

In some embodiments, the third network device sends third tunnel information at a user plane function (for example, an hUPF 145) in the home network to the fourth network device, where the third tunnel information is for identifying a second tunnel between a user plane function in the visited network and the user plane function in the home network.

In some embodiments, the third network device receives the response message for establishment of the session from the fourth network device, where the response message for establishment of the session includes first tunnel information and fourth tunnel information that are at the user plane function in the visited network, the first tunnel information is for identifying a first tunnel between a radio access network device and the user plane function in the visited network, the fourth tunnel information is for identifying the second tunnel, and the accept message for establishment of the session includes the first tunnel information.

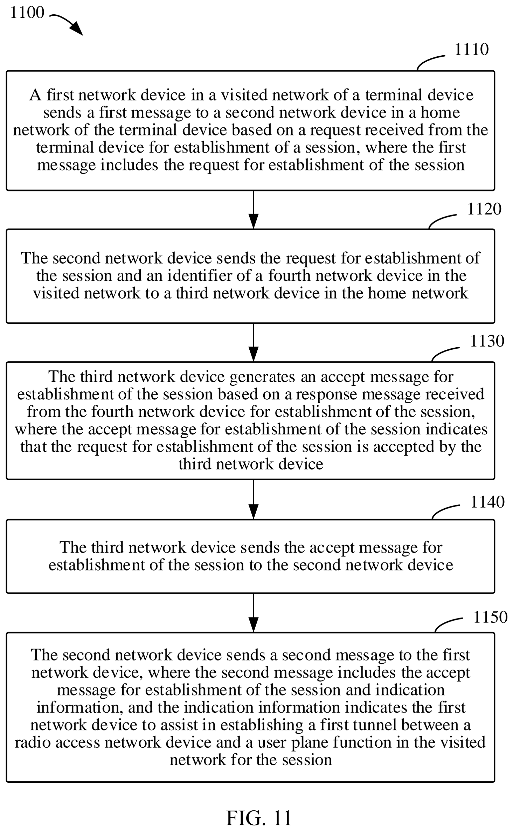

FIG. 11 is a flowchart of a communication process 1100 performed at a communication system according to some embodiments of this disclosure. For ease of understanding, FIG. 11 is described with reference to FIG. 2 to FIG. 4A and FIG. 4B. For example, the communication process 1100 may relate to a first network device (vAMF) 131, a second network device (hAMF) 141, and a third network device (hSMF) 142 shown in FIG. 2, and may further relate to a fourth network device (vSMF) 132, UE 110, a RAN 120, a vNRF 133, a vUPF 134, an hNRF 144 and an hUPF 145 in a visited network shown in FIG. 3 A and FIG. 3B and FIG. 4A and FIG. 4B.

In 1110, the first network device in the visited network of the terminal device sends a first message to the second network device in a home network of the terminal device based on a request received from the terminal device for establishment of a session, where the first message includes the request for establishment of the session. In 1120, the second network device sends the request for establishment of the session and an identifier of a fourth network device in the visited network to the third network device in the home network.

In 1130, the third network device generates an accept message for establishment of the session based on a response message received from the fourth network device for establishment of the session, where the accept message for establishment of the session indicates that the request for establishment of the session is accepted by the third network device. In 1140, the third network device sends the accept message for establishment of the session to the second network device.

In 1150, the second network device sends a second message to the first network device, where the second message includes the accept message for establishment of the session and indication information, and the indication information indicates the first network device to assist in establishing a first tunnel between the radio access network device and the user plane function in the visited network for the session.

In some embodiments, the first network device determines the identifier of the fourth network device before sending the first message, where the first message includes the identifier of the fourth network device. For example, the first network device may parse the request of the terminal device for establishment of the session, determine the identifier of the fourth network device, encapsulate the identifier of the fourth network device into the first message, and send the identifier of the fourth network device to the second network device.

In some embodiments, the first network device obtains the identifier of the fourth network device from a storage function device in the visited network based on network slice information in the request for establishment of the session.

In some embodiments, the first network device selects, based on a locally configured selection policy, the fourth network device used for the request for establishment of the session; and the first network device determines the identifier of the selected fourth network device.

Optionally, when the first network device does not parse the request of the terminal device for establishment of the session, the second network device obtains the identifier of the fourth network device in the visited network from a network repository function in the home network based on network slice information requested by the terminal device in the first message.

In some embodiments, the second network device sends the identifier of the fourth network device and the request for establishment of the session to the third network device. In some embodiments, the third network device sends third tunnel information at a user plane function in the home network to the fourth network device, where the third tunnel information is for identifying a second tunnel between the user plane function in the visited network and the user plane function in the home network.

In some embodiments, the fourth network device sends the third tunnel information to the user plane function in the visited network; the fourth network device receives, from the user plane function in the visited network, first tunnel information and fourth tunnel information that are at the user plane function in the visited network; and the user plane function in the visited network binds the third tunnel information to the fourth tunnel information, where the third tunnel information and the fourth tunnel information are for identifying the second tunnel.

In some embodiments, the third network device receives the response message for establishment of the session from the fourth network device, where the response message for establishment of the session includes the first tunnel information and the fourth tunnel information. In some embodiments, the accept message for establishment of the session includes the first tunnel information.

In some embodiments, the first network device sends the first tunnel information to the radio access network device, and the first network device receives, from the radio access network device, the second tunnel information that is for establishing the first tunnel and that is at the radio access network device. In some embodiments, the first network device sends the second tunnel information to the user plane function in the visited network based on the indication information via the fourth network device, to assist in establishing the first tunnel. In some embodiments, the user plane function in the visited network binds the first tunnel information to the second tunnel information, and the first tunnel information and the second tunnel information are for identifying the first tunnel.

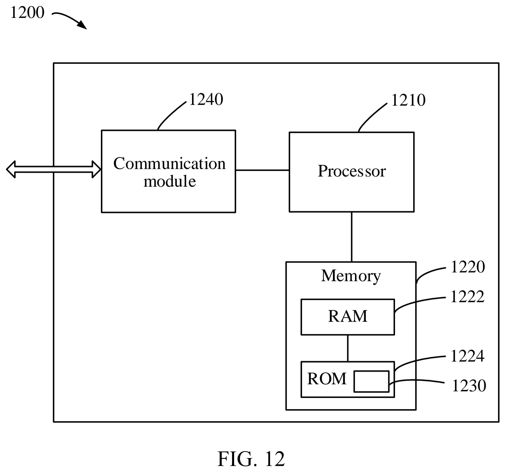

FIG. 12 is a block diagram of an example device 1200 that may be used to implement an embodiment of this disclosure. The device 1200 may be implemented or included in a first network device, a second network device, a third network device, or another device described with reference to FIG. 1A to FIG. 11.

As shown in FIG. 12, the device 1200 includes one or more processors 1210, one or more memories 1220 coupled to the processor 1210, and a communication module 1240 coupled to the processor 1210.

The communication module 1240 may be configured to perform bidirectional communication. The communication module 1240 may have at least one communication interface for communication. The communication interface may include any interface necessary for communicating with another device.

The processor 1210 may be of any type suitable for a local technology network, and may include but is not limited to at least one of the following: one or more of a general-purpose computer, a dedicated computer, a microcontroller, a digital signal processor (Digital Signal Processor, DSP), or a controller-based multi-core controller architecture. The device 1200 may have a plurality of processors, for example, application-specific integrated circuit chips, which in time belong to a clock synchronized with a main processor.

The memory 1220 may include one or more non-volatile memories and one or more volatile memories. An example of the non-volatile memory includes but is not limited to at least one of the following: a read-only memory (Read-Only Memory, ROM) 1224, an erasable programmable read-only memory (Erasable Programmable Read Only Memory, EPROM), a flash memory, a hard disk drive, a compact disc (Compact Disc, CD), a digital versatile disc (Digital Versatile Disc, DVD), or another magnetic storage and/or optical storage. Examples of the volatile memory include but are not limited to at least one of the following: a random access memory (Random Access Memory, RAM) 1222, or another volatile memory that does not last for poweroff duration.

A computer program 1230 includes computer-executable instructions executed by an associated processor 1210. The program 1230 may be stored in the ROM 1224. The processor 1210 may perform any suitable actions and processing by loading the program 1230 into the RAM 1222.

Embodiments of this disclosure may be implemented by using the program 1230, so that the device 1200 may perform any process discussed with reference to FIG. 2 to FIG. 11. Embodiments of this disclosure may alternatively be implemented by hardware or a combination of software and hardware.

The program 1230 may be tangibly included in a computer-readable medium, and the computer-readable medium may be included in the device 1200 (for example, in the memory 1220) or another storage device that can be accessed by the device 1200. The program 1230 may be loaded from the computer-readable medium into the RAM 1222 for execution. The computer-readable medium may include any type of tangible non-volatile memory, for example, a ROM, an EPROM, a flash memory, a hard disk drive, a CD, or a DVD.

In some embodiments, the communication module 1240 in the device 1200 may be implemented as a transmitter and a receiver (or a transceiver), and may be configured to send/receive, for example, a plurality of pieces of TCI, at least one message, and capability information. In addition, the device 1200 may further include one or more of a scheduler, a controller, and a radio frequency/antenna. Details are not described in this disclosure.

For example, the device 1200 in FIG. 12 may be implemented as an electronic device, or may be implemented as a chip or a chip system in the electronic device. This is not limited in this embodiment of this disclosure.

It should be noted that the foregoing embodiments are some implementations provided in this application, and are merely intended to describe the technical solutions of this application more clearly, but do not constitute a limitation on another embodiment of this application. In another embodiment, more or fewer procedures or steps, more or fewer components, more or fewer service functions, different scheduling policies, and the like may be further included. This is not limited herein. A person of ordinary skill in the art may learn that with evolution of a network architecture and emergence of a new service scenario, the technical solutions provided in this application are also applicable to resolving a similar technical problem.

An embodiment of this disclosure further provides a chip. The chip may include an input interface, an output interface, and a processing circuit. In embodiments of this disclosure, the input interface and the output interface may complete signaling or data interaction, and the processing circuit may complete generation and processing of signaling or data information.

An embodiment of this disclosure further provides a chip system, including a processor, configured to support a computing device in implementing functions in any one of the foregoing embodiments. In a possible design, the chip system may further include a memory, configured to store necessary program instructions and data. When the processor runs the program instructions, a device in which the chip system is installed is caused to implement the method in any one of the foregoing embodiments. For example, the chip system may include one or more chips, or may include a chip and another discrete device.

An embodiment of this disclosure further provides a processor, configured to be coupled to a memory. The memory stores instructions. When the processor runs the instructions, the processor is caused to perform the method and the function in any one of the foregoing embodiments.

An embodiment of this disclosure further provides a computer program or a computer program product including instructions. When the computer program or the computer program product is run on a computer, the computer is caused to perform the method and the function in any one of the foregoing embodiments.

An embodiment of this disclosure further provides a computer-readable storage medium. The computer-readable storage medium stores computer instructions. When a processor runs the instructions, the processor is caused to perform the method and the function in any one of the foregoing embodiments.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this disclosure are shown and described as block diagrams, flowcharts, or some other figures, it should be understood that the blocks, devices, systems, techniques, or methods described in this specification may be implemented as, for example, non-limiting examples, hardware, software, firmware, dedicated circuits or logic, general-purpose hardware, controllers, other computing devices, or a combination thereof.

This disclosure further provides at least one computer program product tangibly stored in a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code used for implementing the method in this disclosure may be written in one or more programming languages. The computer program code may be provided for a processor of a general-purpose computer, a dedicated computer, or another programmable data processing device, so that when the program code is executed by the computer or the another programmable data processing device, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of this disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, device, or apparatus. The computer-readable medium may be a computer-readable signal medium or a computer-readable storage medium. The computer-readable medium may include but is not limited to an electronic, magnetic, optical, electromagnetic, infrared, or semiconductor system, device, or apparatus, or any suitable combination thereof. More detailed examples of the computer-readable storage medium include an electrical connection with one or more wires, a portable computer disk, a hard disk drive, a random access memory (RAM), a read-only memory (ROM), an erasable programmable read-only memory (EPROM or a flash memory), an optical storage device, a magnetic storage device, or any suitable combination thereof.

In addition, although the operations of the methods in this disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more devices according to this disclosure may be specific in one device. Instead, features and functions of one device described above may be further specific in a plurality of devices.

The foregoing has described various implementations of this disclosure. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

In the foregoing specific implementations, the objectives, the technical solutions, and the benefits of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions of embodiments of this application shall fall within the protection scope of embodiments of this application.

It should be noted that although the foregoing describes embodiments of this application with reference to the accompanying drawings, the foregoing embodiments are not independent of each other, and may also be combined to obtain another embodiment. Division of manners, cases, categories, and embodiments in embodiments of this application is merely for ease of description, and shall not constitute a special limitation. Various manners, categories, cases, and features in embodiments may be combined with each other provided that they comply with logic. The implementations of this application may be randomly combined to achieve different technical effects. Various combinations are not listed in embodiments of this application.

## Claims

1. A communication method, comprising:
sending, by a first network device in a visited network of a terminal device, a first message to a second network device in a home network of the terminal device based on a request received from the terminal device for establishment of a session, wherein the first message comprises the request for establishment of the session; and
receiving, by the first network device, a second message from the second network device, wherein the second message comprises an accept message for establishment of the session and indication information, the accept message for establishment of the session indicates that the request for establishment of the session is accepted by a third network device in the home network, and the indication information indicates the first network device to assist in establishing a first tunnel between a radio access network device and a user plane function in the visited network for the session.

2. The method according to claim 1, wherein the accept message for establishment of the session comprises first tunnel information that is for establishing the first tunnel and that is at the user plane function in the visited network.

3. The method according to claim 2, further comprising:
sending, by the first network device, the first tunnel information to the radio access network device; and
receiving, by the first network device from the radio access network device, second tunnel information that is for identifying the first tunnel and that is at the radio access network device.

4. The method according to claim 3, further comprising:
sending, by the first network device, the second tunnel information to the user plane function in the visited network based on the indication information via a fourth network device in the visited network, wherein the first tunnel information and the second tunnel information are for identifying the first tunnel.

5. The method according to claim 4, further comprising:
determining, by the first network device, an identifier of the fourth network device before sending the first message, wherein the first message comprises the identifier of the fourth network device.

6. The method according to claim 5, wherein determining the identifier of the fourth network device comprises:
obtaining, by the first network device, the identifier of the fourth network device from a storage function device in the visited network based on network slice information in the request for establishment of the session.

7. The method according to claim 5, wherein determining the identifier of the fourth network device comprises:
selecting, by the first network device based on a locally configured selection policy, the fourth network device used for the request for establishment of the session; and
determining, by the first network device, the identifier of the selected fourth network device.

8. The method according to claim 4, further comprising:
determining, by the first network device, an identifier of the fourth network device from the second message, wherein the identifier of the fourth network device is obtained by the second network device from a storage function device in the visited network.

9. A communication method, comprising:
receiving, by a second network device in a home network of a terminal device, a first message from a first network device in a visited network of the terminal device, wherein the first message comprises a request of the terminal device for establishment of a session; and
sending, by the second network device, a second message to the first network device, wherein the second message comprises an accept message for establishment of the session and indication information, the accept message for establishment of the session indicates that the request for establishment of the session is accepted by a third network device in the home network, and the indication information indicates the first network device to assist in establishing a first tunnel between a radio access network device and a user plane function in the visited network for the session.

10. The method according to claim 9, wherein the first message comprises an identifier of a fourth network device in the visited network.

11. The method according to claim 9, further comprising:
obtaining, by the second network device, an identifier of a fourth network device in the visited network from a network repository function in the home network based on network slice information requested by the terminal device in the first message.

12. The method according to claim 10 or 11, further comprising:
sending, by the second network device, the request for establishment of the session and the identifier of the fourth network device to the third network device in the home network.

13. The method according to claim 12, further comprising:
receiving, by the second network device, the accept message for establishment of the session from the third network device, wherein the accept message for establishment of the session is generated by the third network device based on a response message received from the fourth network device for establishment of the session.

14. The method according to claim 13, wherein the accept message for establishment of the session comprises first tunnel information at the user plane function in the visited network, and the first tunnel information is for identifying the first tunnel.

15. A communication method, comprising:
receiving, by a third network device in a home network of a terminal device, a request of the terminal device for establishment of a session and an identifier of a fourth network device in the visited network from a second network device in the home network of the terminal device;
generating, by the third network device, an accept message for establishment of the session based on a response message received from the fourth network device for establishment of the session, wherein the accept message for establishment of the session indicates that the request for establishment of the session is accepted by the third network device; and
sending, by the third network device, the accept message for establishment of the session to the second network device.

16. The method according to claim 15, further comprising:
sending, by the third network device, third tunnel information at a user plane function in the home network to the fourth network device, wherein the third tunnel information is for identifying a second tunnel between a user plane function in the visited network and the user plane function in the home network.

17. The method according to claim 16, further comprising:
receiving, by the third network device, the response message for establishment of the session from the fourth network device, wherein the response message for establishment of the session comprises first tunnel information and fourth tunnel information that are at the user plane function in the visited network, the first tunnel information is for identifying a first tunnel between a radio access network device and the user plane function in the visited network, the fourth tunnel information is for identifying the second tunnel, and the accept message for establishment of the session comprises the first tunnel information.

18. A method for a communication system, comprising:
sending, by a first network device in a visited network of a terminal device, a first message to a second network device in a home network of the terminal device based on a request received from the terminal device for establishment of a session, wherein the first message comprises the request for establishment of the session;
sending, by the second network device, the request for establishment of the session and an identifier of a fourth network device in the visited network to a third network device in the home network;
generating, by the third network device, an accept message for establishment of the session based on a response message received from the fourth network device for establishment of the session, wherein the accept message for establishment of the session indicates that the request for establishment of the session is accepted by the third network device;
sending, by the third network device, the accept message for establishment of the session to the second network device; and
sending, by the second network device, a second message to the first network device, wherein the second message comprises the accept message for establishment of the session and indication information, and the indication information indicates the first network device to assist in establishing a first tunnel between a radio access network device and a user plane function in the visited network for the session.

19. The method according to claim 18, further comprising:
determining, by the first network device, the identifier of the fourth network device before sending the first message, wherein the first message comprises the identifier of the fourth network device.

20. The method according to claim 19, wherein determining the identifier of the fourth network device comprises:
obtaining, by the first network device, the identifier of the fourth network device from a storage function device in the visited network based on network slice information in the request for establishment of the session.

21. The method according to claim 19, wherein determining the identifier of the fourth network device comprises:
selecting, by the first network device based on a locally configured selection policy, the fourth network device used for the request for establishment of the session; and
determining, by the first network device, the identifier of the selected fourth network device.

22. The method according to claim 18, further comprising:
obtaining, by the second network device, the identifier of the fourth network device in the visited network from a network repository function in the home network based on network slice information requested by the terminal device in the first message.

23. The method according to claim 19 or 22, further comprising:
sending, by the second network device, the identifier of the fourth network device and the request for establishment of the session to the third network device.

24. The method according to claim 23, further comprising:
sending, by the third network device, third tunnel information at a user plane function in the home network to the fourth network device, wherein the third tunnel information is for identifying a second tunnel between the user plane function in the visited network and the user plane function in the home network.

25. The method according to claim 24, further comprising:
sending, by the fourth network device, the third tunnel information to the user plane function in the visited network;
receiving, by the fourth network device from the user plane function in the visited network, first tunnel information and fourth tunnel information that are at the user plane function in the visited network; and
binding, by the user plane function in the visited network, the third tunnel information to the fourth tunnel information, wherein the third tunnel information and the fourth tunnel information are for identifying the second tunnel.

26. The method according to claim 25, further comprising:
receiving, by the third network device, the response message for establishment of the session from the fourth network device, wherein the response message for establishment of the session comprises the first tunnel information and the fourth tunnel information.

27. The method according to claim 26, wherein the accept message for establishment of the session comprises the first tunnel information.

28. The method according to claim 27, further comprising:
sending, by the first network device, the first tunnel information to the radio access network device; and
receiving, by the first network device from the radio access network device, second tunnel information that is for identifying the first tunnel and that is at the radio access network device.

29. The method according to claim 28, further comprising:
sending, by the first network device, the second tunnel information to the user plane function in the visited network based on the indication information via the fourth network device.

30. The method according to claim 29, further comprising:
binding, by the user plane function in the visited network, the first tunnel information to the second tunnel information, wherein the first tunnel information and the second tunnel information are for identifying the first tunnel.

31. The method according to claim 18, wherein the first network device is an access and mobility management function in the visited network, the second network device is an access and mobility management function in the home network, the third network device is a session management function in the home network, and the fourth network device is a session management function in the visited network.

32. A network device, comprising:
a processor; and
a memory, wherein the memory stores instructions, and when the instructions are executed by the processor, the network device is caused to perform the method according to any one of claims 1 to 17.

33. A communication system, comprising:
a first network device, configured to perform the method according to any one of claims 1 to 8;
a second network device, configured to perform the method according to any one of claims 9 to 14; and
a third network device, configured to perform the method according to any one of claims 15 to 17.

34. A chip, wherein the chip comprises a processing circuit, and the processing circuit is configured to perform the method according to any one of claims 1 to 17.

35. A computer-readable storage medium, wherein the computer-readable storage medium stores instructions, and when the instructions are executed by a device, the device is caused to perform the method according to any one of claims 1 to 17.

36. A computer program product, wherein the computer program product comprises instructions, and when the instructions are executed by a device, the device is caused to perform the method according to any one of claims 1 to 17.

37. A network device, comprising a unit configured to perform the method according to any one of claims 1 to 17.
